(19) Europäisches Patentamt
European Patent Office
Office européen des brevets

(11) EP 1 645 576 A1

(12) # EUROPEAN PATENT APPLICATION
published in accordance with Art. 158(3) EPC

(43) Date of publication:
**12.04.2006 Bulletin 2006/15**

(21) Application number: **04747728.6**

(22) Date of filing: **13.07.2004**

(51) Int Cl.:
***C08F 293/00*** *(1974.07)* ***C08F 8/00*** *(1974.07)*

(86) International application number:
**PCT/JP2004/010264**

(87) International publication number:
**WO 2005/005503 (20.01.2005 Gazette 2005/03)**

(84) Designated Contracting States:
**DE**

(30) Priority: **14.07.2003 JP 2003196540**

(71) Applicant: **MITSUBISHI CHEMICAL CORPORATION**
**Tokyo 108-0014 (JP)**

(72) Inventors:
- **SUZUKI, Toru**
**Mitsubishi Chemical Group, Science &**
**Yokohama-shi, Kanagawa 227-8502 (JP)**
- **SHIMIZU, Fumihiko**
**Mitsubishi Chem.Group, Science&**
**Yokohama-shi, Kanagawa 227-8502 (JP)**

(74) Representative: **Vossius & Partner**
**Siebertstrasse 4**
**81675 München (DE)**

(54) **PROPYLENE BLOCK COPOLYMER**

(57) A polymer is provided which, even when no halogen such as chlorine is contained therein, has satisfactory adhesiveness and applicability in coating to propylene polymers as substrates and which has surface hydrophilicity. It is a propylene block copolymer **characterized by** being represented by the following formula (I):

PP-a-R (I)

(wherein PP represents a polypropylene segment in which the proportion of pentads represented by mmmm to all pentads is 10-60%; symbol a represents a group which connects PP to R; and R represents a polymer segment containing polar groups).

EP 1 645 576 A1

## Description

FIELD OF THE INVENTION

The present invention relates to a propylene block copolymer. More particularly, the invention relates to a propylene block copolymer comprising a structure having a polypropylene segment and a functional segment.

BACKGROUND ART

Propylene polymers and propylene/α-olefin copolymers are used in a wide range of fields because these polymers are inexpensive and excellent in mechanical properties, heat resistance, chemical resistarice, water resistance, etc. However, since such propylene polymers have no polar groups in the molecule, they generally are lowly polar and have been difficult to bond to polar substances or blend with polar resins. Furthermore, moldings made of polypropylene have a hydrophobic surface and this has necessitated the incorporation of a low-molecular surfactant or the like for use in applications where non-fogging properties and antistatic properties are required. There have hence been cases where the surfactant bleeds out to cause the problem of surface fouling.

For mitigating those drawbacks, various techniques have been attempted, such as a technique in which the surface of a molding made of the propylene polymer is chemically treated with a chemical or the like and a technique in which the molding surface is oxidized by a corona discharge treatment, plasma treatment, flame treatment, or the like. However, not only these techniques necessitate a special apparatus but also the adhesiveness-improving effect thereof is insufficient.

Under those circumstances, the so-called chlorinated polypropylene was developed as a polymer having satisfactory adhesiveness to propylene polymers and produced by a relatively simple method. Chlorinated polypropylene generally is soluble in hydrocarbon solvents such as toluene and xylene and has relatively satisfactory adhesiveness to propylene polymers as substrates. In addition, since the polarity attributable to carbon-chlorine bonds has been imparted to the molecule, chlorinated polypropylene can be used in the following manner. A coating film of chlorinated polypropylene is formed on a surface of a propylene polymer as a substrate by a relatively simple method comprising applying a hydrocarbon solution of the chlorinated propylene to the propylene polymer surface and removing the solvent, and this substrate can be coated or bonded to another resin through the coating film. Incidentally, it is known that modified chlorinated polypropylenes obtained by further modifying chlorinated polypropylene by the graft copolymerization of polar monomers are even more effective in improving adhesiveness.

The adhesiveness of propylene polymers to polar substances can be relatively easily improved with chlorinated polypropylene or a modified chlorinated polypropylene as described above. However, there has been a problem, for example, that to increase the content of chlorine results in a decrease in adhesiveness between the chlorinated polypropylene or modified chlorinated polypropylene and propylene polymers as substrates.

At first, a resin containing no chlorine and having adhesiveness to polypropylene was obtained by the solvent extraction of the polypropylene obtained by propylene polymerization with a Ziegler-Natta catalyst (see, for example, patent document 1). It has been reported that the same resin is obtained also by epimerizing isotactic polypropylene (iPP) with a palladium catalyst or the like in a hydrogen atmosphere at a high temperature (see, for example, non-patent document 1). However, the polymers obtained by these methods have been ones which have insufficient solubility or poor tackiness.

Although propylene polymers having polar groups are known, the polymers in general use are ones obtained by grafting one or more radical-polymerizable monomers such as maleic anhydride, acrylic acid, and/or an acrylic ester onto polypropylene with a peroxide. Such graft polymers are useful as an adhesive. However, there has been a problem that when the proportion of polar groups to be grafted is increased in order to enhance adhesiveness to polar substances, the resultant polymer is apt to cause gelation and is hence unusable as a coating material.

Patent Document 1

U.S. Patent 3,175,999

Non-Patent Document 1

*J. Am. Chem. Soc.,* 1975, Vol.97, p.1018

DISCLOSURE OF THE INVENTION

In view of the problems described above, a subject for the invention is to provide a polypropylene block copolymer

which has both satisfactory adhesiveness to propylene polymers as substrates and an excellent affinity for polar substances such as metals and polar resins and further has high solubility and excellent nontackiness.

As a result of investigations made in order to accomplish the subject, it has been found that the subject is accomplished with a block copolymer comprising isotactic polypropylene in which the proportion of *mmmm* pentads to all pentads is 10-60% and a polar-group-containing polyolefin bonded thereto. The invention has been thus achieved.

Namely, a first essential point of the invention resides in a propylene block copolymer characterized by being represented by the following formula (I):

PP-a-R (I)

(wherein PP represents a polypropylene segment in which the proportion of pentads represented by mmmm to all pentads is 10-60%; symbol a represents a group which connects PP to R; and R represents a polymer segment containing polar groups).

The PP is, for example, a homopolymer of propylene or a copolymer of propylene and either at least one $\alpha$-olefin other than propylene or ethylene. It is preferred that the proportion of the R be from 15% by mole to 90% by mole in terms of the proportion of the monomer units thereof to the whole propylene block copolymer.

A second essential point of the invention resides in a process for producing the olefin block copolymer described above, characterized by polymerizing one or more polymerizable monomers with a propylene block polymer which has a substituent at an end and is represented by the following formula (II):

PP-X (II)

(wherein PP represents a polypropylene segment in which the proportion of pentads represented by *mmmm* to all pentads is 10-60%; and X represents a reactive group or a substituent containing a reactive group).

A third essential point of the invention resides in a propylene polymer which has a substituent at an end and is represented by the formula (II) given above. It is preferred that X be a hydroxyl group, an amino group, a mercapto group, or a group having any of these substituents.

BEST MODE FOR CARRYING OUT THE INVENTION

The propylene block copolymer of the invention will be explained below in detail.

[1] Propylene Block Copolymer

The propylene block copolymer of the invention is a block copolymer comprising a polypropylene segment and a polymer segment containing polar groups and is represented by the following formula (I):

PP-a-R (I)

(In formula (I), PP represents a polypropylene segment in which the proportion of pentads represented by *mmmm* to all pentads is 10-60%; symbol a represents a group which connects PP to R; and R represents a polymer segment containing polar groups.)

The molecular weight of the propylene block copolymer of the invention is not particularly limited as long as the copolymer is soluble in hydrocarbon solvents. However, the molecular weight thereof is generally 2,200 or higher, preferably 5,000 or higher, and is generally 2,400,000 or lower, preferably 1,000,000 or lower, more preferably 500,000 or lower.

The molecular weight distribution thereof is not particularly limited. However, the ratio of the weight-average molecular weight Mw to the number-average molecular weight Mn, i.e., Mw/Mn, is preferably 20 or lower, more preferably 10 or lower, most preferably 6 or lower.

The proportion of the polymer segment containing polar groups to the whole propylene block copolymer is not particularly limited and can be suitably regulated in order to obtain desired properties. However, the proportion thereof in terms of the proportion of monomer units is generally 15% by mole or higher, preferably 18% by mole or higher, more preferably 20% by mole or higher, and is generally 90% by mole or lower, preferably 80% by mole or lower, more preferably 70% by mole or lower.

The polymer segment containing polar groups contributes to the affinity of the propylene block copolymer of the invention for polar substances. Too low proportions of R to the whole polymer are undesirable because this copolymer has a reduced affinity for polar substances. Too high proportions thereof are undesirable because this copolymer has impaired solubility in solvents.

Although propylene polymers having polar groups are known, polymers obtained by grafting polar groups onto polypropylene are generally used as stated above. Such graft polymers are apt to cause gelation and are hence not useful as a coating material. For example, in the case where a propylene polymer containing polar groups is to be used as a coating material, this polymer generally is reacted or blended with an acrylic acid polymer or urethane polymer before being used. However, when this propylene polymer is a graft polymer, it has many reaction sites and is hence apt to undergo three-dimensional crosslinking and this readily causes gelation.

In contrast, the propylene polymer of the invention, which has a polar-group-containing polymer segment at an end, is inhibited from causing gelation. The reason for this is thought to be that since this polymer has polar groups at the end only, the polymer yielded by reaction or blending with an acrylic acid polymer or urethane polymer is a two-dimensional block copolymer.

The presence of the polar-group-containing polymer segment (R in formula (I)) at an end of the propylene block copolymer of the invention can be judged from an examination by $^1$H-NMR. Namely, the chemical shift for the protons of the terminal methylene group of the propylene polymer changes upon the bonding of the connecting group (a in formula (I)) to the methylene group and becomes distinguishable from the chemical shift for the protons of the methylene groups in the propylene polymer not containing the connecting group. Thus, the presence of the polar-group-containing polymer segment at an end is indicated.

Furthermore, the absence of a grafted functional group in the main chain can be judged in the following manner. When the amount of the connecting group in the propylene polymer based on all monomer units is expressed as x (% by mole) and the number-average degree of polymerization of the propylene polymer is expressed as N, then the relationship $x>100/N$ holds in the case where the connecting group, i.e., the polar-group-containing polymer segment, has been bonded not only at an end but also in the main chain through grafting. Consequently, when the relationship $x\leq100/N$ holds, this means that no grafted functional group (connecting group) is present in the main chain. Incidentally, the number-average degree of polymerization N is defined with the number-average molecular weight Mn as determined by GPC analysis and the molecular weight M of the monomer as N=Mn/M.

(1) PP

In formula (I), PP represents a polypropylene segment. The weight-average molecular weight thereof is generally 2,000 or higher, preferably 5,000 or higher, and is generally 400,000 or lower, preferably 300,000 or lower, most preferably 250,000 or lower. In the invention, the proportion of *mmmm* pentads, which is an index to stereoregularity, is from 10% to 60% based on all pentads. The proportion of *mmmm* pentads to all pentads is determined by analyzing the polymer by $^{13}$C-NMR spectroscopy to examine peaks attributable to the methyl carbon atoms of the propylene unit chain part formed by head-to-tail bonding and determining the proportion of the area $S_1$ of the peak whose top is located at 21.8 ppm to the total area S of the peaks appearing in the range of from 19.8 ppm to 22.2 ppm provided that the chemical shift of the top of the peak attributable to the pentads represented by mmmm is regarded as at 21.8 ppm.

One feature of the propylene block copolymer of the invention resides in the stereoregularity of PP. Too low values of that proportion in PP are undesirable because this propylene block copolymer has reduced adhesiveness to PP. Too high values thereof are undesirable because this propylene block copolymer has impaired solubility in solvents in application to the surface of PP or the like.

The polypropylene segment has regio irregular units present in the main chain which are derived from 2,1-inserted propylene monomer and/or 1,3-inserted propylene monomer. The total proportion of the regio irregular units formed by 2,1-insertion and 1,3-insertion to all propylene insertion is preferably 0.05% or higher and is generally 20% or lower, preferably 10% or lower. The presence of these regio irregular units in the main chain enhances the solubility of the copolymer of the invention in solvents.

The polypropylene segment in the invention preferably has no reactive functional groups because the presence of reactive functional groups in the polypropylene segment accelerates gelation as stated above. Although the polypropylene segment may have reactive functional groups in such an amount as not to cause gelation, the molar proportion of functional groups to the propylene monomer units is generally 5% or lower, preferably 3% or lower, more preferably 1% or lower, most preferably 0%.

The polypropylene segment in the invention may contain, besides propylene units, less than 50% units derived from one or more compounds containing at least one carbon-carbon unsaturated bond. The amounts of these optional units is generally less than 30%, preferably less than 10%, most preferably less than 5%.

The number of carbon atoms in each unit derived from a compound containing at least one carbon-carbon unsaturated bond is generally 2 or larger and is generally 20 or smaller, preferably 15 or smaller, more preferably 10 or smaller.

Preferred examples of the units derived from compounds containing at least one carbon-carbon unsaturated bond other than propylene include units of $\alpha$-olefins, conjugated and unconjugated dienes, and cycloolefins.

The $\alpha$-olefins are ones in which the number of carbon atoms is generally 2 or larger and is generally 20 or

smaller, preferably 10 or smaller, more preferably 6 or smaller, even more preferably 4 or smaller. Preferred are ones having no aromatic substituents. Examples of the α-olefins include ethylene, 1-butene, 4-methyl-1-pentene, 1-hexene, 1-octene, 1-decene, 1-dodecene, 1-tetradecene, 1-hexadecene, 1-octadecene, and 1-eicosene. Preferred are ethylene and 1-butene.

The conjugated and unconjugated dienes are ones in which the number of carbon atoms is generally 4 or larger and is generally 20 or smaller, preferably 15 or smaller, more preferably 10 or smaller. Examples thereof include butadiene, 1,4-hexadiene, 1,5-hexadiene, 7-methyl-1,6-octadiene, 1,8-nonadiene, and 1,9-decadiene.

The cycloolefins are ones in which the number of carbon atoms is generally 4 or larger and is generally 20 or smaller, preferably 15 or smaller, more preferably 10 or smaller. Examples thereof include cyclopropene, cyclobutene, cyclopentene, norbornene, and dicyclopentadiene.

(2) a

In formula (I), symbol a is a group which connects PP to R. This group is not particularly limited as long as it chemically bonds the polypropylene segment to the polar-group-containing polymer segment. In general, however, it is either a divalent group containing one or more heteroatoms or a substituent containing this group.

The heteroatoms are preferably oxygen, nitrogen, and sulfur, more preferably oxygen and nitrogen, most preferably oxygen. Examples of the divalent group containing one or more heteroatoms include oxygen-containing divalent groups such as an ether bond, ester bond, silyl ether bond, and carbonyl bond; sulfur-containing divalent groups such as a thioether bond, thioester bond, thiocarboxy group, sulfo group, sulfino group, and sulfeno group; and nitrogen-containing divalent groups such as an amide bond, imide bond, urethane bond, and urea bond. Preferred of these are oxygen-containing divalent groups. Especially preferred of the oxygen-containing divalent groups are an ether bond and an ester bond.

In the substituent containing one or more divalent groups containing one or more heteroatoms, the kind of the substituent is not particularly limited. However, the molecular weight of the substituent moiety is generally 14 or higher and is generally 600 or lower. Examples of the substituent include hydrocarbon groups and heteroatom-containing hydrocarbon groups. The number of carbon atoms in each of these groups is generally 1 or larger, preferably 2 or larger, and is generally 40 or smaller, preferably 30 or smaller, more preferably 20 or smaller. Examples of the hydrocarbon groups include alkyl groups and aryl groups. The heteroatom-containing hydrocarbon groups preferably are oxygen-atom-containing hydrocarbon groups, and examples thereof include alkoxy groups and aryloxy groups. Of those groups, hydrocarbon groups are preferred and aryl groups are more preferred. Preferred of the aryl groups are one which has a heteroatom-containing divalent group in the para position in the aryl group. In the substituent containing one or more heteroatom-containing divalent groups, the number of the heteroatom-containing divalent groups preferably is 1.

(3) R

In formula (I), R is a polymer segment containing polar groups.

The major elements constituting the polymer segment containing polar groups are not particularly limited. However, this polymer segment generally is a homopolymer or copolymer obtained using as a monomer an unsaturated hydrocarbon which may contain one or more heteroatoms.

The weight-average molecular weight of the polymer segment containing polar groups is generally 200 or higher, preferably 500 or higher, more preferably 1,000 or higher, even more preferably 2,000 or higher, and is generally 2,000,000 or lower, preferably 1,000,000 or lower, more preferably 500,000 or lower.

The amount of the polar groups possessed by the polar-group-containing polymer segment is such that the proportion of the polar groups to all monomer units constituting R is generally 15% by mole or higher, preferably 50% by mole or higher, more preferably 80% by mole or higher, even more preferably 100% by mole.

The polar groups of the polar-group-containing polymer segment are not limited as long as they neither cause the propylene block copolymer of the invention to undergo self-decomposition nor inhibit polymerization reaction. Examples thereof include halogen atoms such as chlorine and bromine; oxygen-containing polar groups such as a hydroxy group, ester group, epoxy group, carboxyl group, acid anhydride group, hydroperoxy group, and formyl group; sulfur-containing polar groups such as a thiocarboxy group, sulfo group, sulfino group, sulfeno group, thiocyanato group, thioformyl group, and mercapto group; halogen-containing polar groups such as a haloformyl group; nitrogen-containing polar groups such as a carbamoyl group, hydrazinocarbonyl group, amidino group, cyano group, nitrilo group, isocyano group, cyanato group, isocyanato group, amino group, imino group, and hydrazino group; and hydrocarbon groups having these polar groups. Preferred of these are halogen atoms and oxygen-containing polar groups. Preferred of the oxygen-containing polar groups is a hydroxy group, epoxy group, carboxyl group, or acid anhydride group.

This segment generally is one obtained by the chain polymerization of one or more monomers containing at least one polar group. Examples of the kind of the polar-group-containing monomers include (i) radical-polymerizable

monomers, (ii) cyclic monomers, and (iii) ionically polymerizable monomers. For example, the segment is obtained by the radical polymerization of one or more radical-polymerizable monomers, ring-opening polymerization of one or more cyclic monomers, and ionic polymerization of one or more ionically polymerizable monomers. The segment generally is a homopolymer or copolymer of a polar-group-containing monomer and/or oligomer, and may have been modified according to need. This polymer segment may be one in which a monomer and/or oligomer containing no polar groups has been copolymerized.

(i) Radical-Polymerizable Monomers Containing Polar Group

Examples of the radical-polymerizable polar-group-containing monomers for use in radical polymerization include unsaturated carboxylic acids and derivatives thereof, polar-group-containing aromatic vinyl compounds, hydroxy-containing ethylenically unsaturated compounds, nitrogen-containing ethylenically unsaturated compounds, epoxy-group-containing ethylenically unsaturated compounds, vinyl ester compounds, and vinyl chloride.

Examples of the unsaturated carboxylic acids include monocarboxylic acids such as acrylic acid, methacrylic acid, maleic acid, fumaric acid, tetrahydrophthalic acid, itaconic acid, citraconic acid, crotonic acid, and isocrotonic acid; and dicarboxylic acids such as norbornenedicarboxylic acid and bicyclo[2.2.1]hept-2-ene-5,6-dicarboxylic acid. Examples of the derivatives of unsaturated carboxylic acids include derivatives of those carboxylic acids, such as acid anhydrides, acid halides, amides, imides, and esters.

Specific examples of such compounds include acid anhydrides such as maleic anhydride, itaconic anhydride, citraconic anhydride, tetrahydrophthalic anhydride, and bicyclo[2.2.1]hept-2-ene-5,6-dicarboxylic anhydride; acid halides such as maleoyl chloride; amides such as (meth)acrylamide and methyl(meth)acrylamide; imides such as maleimide; and esters such as methyl (meth)acrylate, ethyl (meth)acrylate, propyl (meth)acrylate, t-butyl (meth)acrylate, dimethyl maleate, monomethyl maleate, diethyl maleate, diethyl fumarate, dimethyl itaconate, diethyl citraconate, dimethyl tetrahydrophthalate, dimethyl bicyclo[2.2.1]hept-2-ene-5,6-dicarboxylate, hydroxyethyl (meth)acrylate, hydroxypropyl (meth)acrylate glycidyl (meth)acrylate, aminoethyl methacrylate, and aminopropyl methacrylate. Preferred of these are (meth)acrylic acid, maleic anhydride, methyl (meth)acrylate, ethyl (meth)acrylate, propyl (meth)acrylate, t-butyl (meth) acrylate, hydroxyethyl (meth)acrylate, glycidyl (meth)acrylate, glycidyl methacrylate, and aminopropyl methacrylate.

Preferred examples of the polar-group-containing aromatic vinyl compounds include compounds represented by the following formula (II).

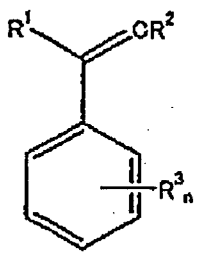

(II)

In formula (II), $R^1$ and $R^2$ represent a hydrogen atom or an alkyl group and may be the same or different. The alkyl groups preferably are alkyl groups having 1-3 carbon atoms. Examples thereof include methyl, ethyl, propyl, and isopropyl.

$R^3$ represents a polar group. Examples of the polar group include halogen atoms such as chlorine and bromine; oxygen-containing groups such as a hydroxy group, ester group, epoxy group, carboxyl group, formyl group, haloformyl group, hydroperoxy group, and acid anhydride group; sulfur-containing groups such as a thiocarboxy group, sulfo group, sulfino group, sulfeno group, thiocyanato group, thioformyl group, and mercapto group; and nitrogen-containing groups such as a carbamoyl group, hydrazinocarbonyl group, amidino group, cyano group, nitrilo group, isocyano group, cyanato group, isocyanato group, amino group, imino group, and hydrazino group. Preferred of these are halogen atoms and oxygen-containing groups. Preferred of the oxygen-containing groups are a hydroxy group, epoxy group, carboxy group, and acid anhydride group.

Furthermore, n represents an integer of generally 1-5 and is preferably 3 or smaller, more preferably 2 or smaller. When n is 2 or larger, the $R^3$'s may be the same or different.

Preferred examples of such polar-group-containing aromatic vinyl compounds include m-chlorostyrene, p-chlorostyrene, and p-chloromethylstyrene. Examples of the polar-group-containing aromatic vinyl compounds other than those represented by formula (II) given above include nitrogen-containing aromatic vinyl compounds which have one

or more nitrogen atoms in the aromatic ring(s). Specific examples thereof include pyridine derivatives such as 4-vinylpyridine, 2-vinylpyridine, 5-ethyl-2-vinylpyridine, 2-methyl-5-vinylpyridine, and 2-isopropenylpyridine; quinoline derivatives such as 2-vinylquinoline and 3-vinylisoquinoline; carbazole derivatives such as N-vinylcarbazole; and N-pyrrolidone derivatives such as N-vinylpyrrolidone.

Examples of the hydroxy-containing ethylenically unsaturated compounds include (meth)acrylic esters such as hydroxyethyl (meth)acrylate, 2-hydroxypropyl (meth)acrylate, 3-hydroxypropyl (meth)acrylate, 2-hydroxy-3-phenoxypropyl (meth)acrylate, 3-chloro-2-hydroxypropyl (meth)acrylate, glycerol mono(meth)acrylate, pentaerythritol mono (meth)acrylate, trimethylolpropane mo(meth)acrylate, tetramethylolethane mono(meth)acrylate, butanediol mono(meth) acrylate, polyethylene glycol mono(meth)acrylate, and 2-(6-hydroxyhexanoyloxy)ethyl acrylate; monohydric alcohols such as 10-undecen-1-ol, 1-octen-3-ol, 2-methanolnorbornene, hydroxystyrene, hydroxyethyl vinyl ether, hydroxybutyl vinyl ether, N-methylolacrylamide, allyl alcohol, allyloxyethanol, and glycerol monoalcohol; and diols such as 2-butene-1,4-diol and glycerol monoallyl ether.

Examples of the nitrogen-containing ethylenically unsaturated compounds include amino-containing ethylenically unsaturated compounds having an ethylenic double bond and an amino group. Examples of such compounds include vinyl monomers having one or more of amino and substituted amino groups represented by the following formula (III).

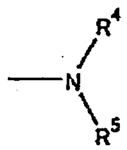

(III)

In formula (III), $R^4$ represents a hydrogen atom, methyl, or ethyl, and $R^5$ represents a hydrogen atom, alkyl group, or cycloalkyl group. The number of carbon atoms in the alkyl group is generally 1 or larger and is generally 12 or smaller, preferably 8 or smaller. The number of carbon atoms in the cycloalkyl group is generally 6 or larger and is generally 12 or smaller, preferably 8 or smaller. These alkyl and cycloalkyl groups may have one or more substituents.

As such amino-containing ethylenically unsaturated compounds, use is made, for example, of derivatives of alkyl esters of acrylic acid or methacrylic acid, such as aminoethyl (meth)acrylate, propylaminoethyl (meth)acrylate, dimethylaminoethyl methacrylate, aminopropyl (meth)acrylate, phenylaminoethyl methacrylate, and cyclohexylaminoethyl methacrylate; vinylamine derivatives such as N-vinyldiethylamine and N-acetylvinylamine; allylamine and allylamine derivatives such as methacrylamine, N-methylacrylamine, N,N-dimethylacrylamide, and N,N-dimethylaminopropylacrylamide; acrylamide and acrylamide derivatives such as N-methylacrylamide; aminostyrenes such as p-aminostyrene; and succinimide derivatives such as 6-aminohexylsuccinimide and 2-aminoethylsuccinimide.

The epoxy-group-containing ethylenically unsaturated compounds are monomers each having one or more polymerizable unsaturated bonds and one or more epoxy groups in the molecule. Examples of such epoxy-group-containing ethylenically unsaturated compounds include glycidyl esters such as glycidyl acrylate, glycidyl methacrylate, dicarboxylic acid mono- and diglycidyl esters, e.g., the mono- and diglycidyl esters of maleic acid, the mono- and diglycidyl esters of fumaric acid, the mono- and diglycidyl esters of crotonic acid, the mono- and diglycidyl esters of tetrahydrophthalic acid, the mono- and diglycidyl esters of itaconic acid, the mono- and diglycidyl esters of butenetricarboxylic acid, the mono- and diglycidyl esters of citraconic acid, the mono- and diglycidyl esters of endo-cis-bicyclo[2.2.1]hept-5-ene-2,3-carboxylic acid, the mono- and diglycidyl esters of endocis-bicyclo[2.2.1]hept-5-ene-2-methyl-2,3-carboxylic acid, and the mono- and diglycidyl esters of allylsuccinic acid, and alkylglycidyl esters of p-styrenecarboxylic acid; glycidyl ethers such as allyl glycidyl ether, 2-methylallyl glycidyl ether, and styrene p-glycidyl ether; epoxides such as 3,4-epoxy-1-butene, 3,4-epoxy-3-methyl-1-butene, 3,4-epoxy-3-methyl-1-pentene, and 5,6-epoxy-1-hexene; and vinylcyclohexene monoxide. Preferred of these are glycidyl esters and glycidyl ethers.

Examples of the vinyl ester compounds include aliphatic vinyl esters such as vinyl acetate, vinyl propionate, vinyl n-butyrate, vinyl isobutyrate, vinyl pivalate, vinyl caproate, Vinyl Versatate, vinyl laurate, vinyl stearate, and vinyl cyclohexanecarboxylate; and aromatic vinyl esters such as vinyl benzoate, vinyl p-t-butylbenzoate, and vinyl salicylate.

Preferred of those radical-polymerizable polar-group-containing monomers are those having 2-15 carbon atoms, such as the aromatic vinyl derivatives, the (meth)acrylic acid derivatives, maleic anhydride, vinyl acetate, acrylonitrile, vinyl chloride, 9-vinylcarbazole, N-vinylpyrrolidone, N,N-dimethylacrylamide, isobutyl vinyl ether, and isobutene. Preferred of these are those having 2-8 carbon atoms, such as the (meth)acrylic acid derivatives, maleic anhydride, vinyl acetate, acrylonitrile, and vinyl chloride. The (meth)acrylic acid derivatives preferably are methyl methacrylate, ethyl methacrylate, t-butyl methacrylate, vinyl acrylate, and butyl acrylate.

(ii) Cyclic Monomers Containing Polar Group

Examples of the cyclic polar-group-containing monomers for use in ring-opening polymerization include lactones, lactams, and cyclic ethers. Specific examples thereof include lactones such as β-propiolactone, β-butyrolactone, δ-valerolactone, glycolide, lactides, and s-caprolactone; lactams such as a-pyrrolidone, γ-butyrolactam, and ε-caprolactam; and cyclic ethers such as ethylene oxide, propylene oxide, epichlorohydrin, oxetane, tetrahydrofuran, octamethylcyclotetrasiloxane, and 2-oxazoline.

Preferred of these are ε-caprolactone, ε-caprolactam, and ethylene oxide.

(iii) Ionically Polymerizable Monomers Containing Polar Group

Examples of the ionically polymerizable monomers include anionically polymerizable monomers such as (meth) acrylic esters, acrylonitrile, and acrylamide.

The components usable in copolymerization with the various monomers shown above are not particularly limited as long as they are copolymerizable. For example, α-olefins, conjugated and unconjugated dienes, and cycloolefins can be used. Preferred of these are α-olefins. Of the α-olefins, aromatic vinyl compounds are preferably used.

Examples of the aromatic vinyl compounds include compounds represented by the following formula (IV).

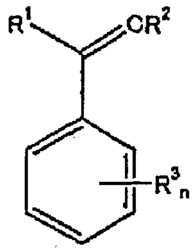

(IV)

In formula (IV), $R^1$ and $R^2$ may be the same or different and represent a hydrogen atom or an alkyl group. The alkyl groups preferably are alkyl groups having 1-3 carbon atoms. Examples thereof include methyl, ethyl, propyl, and isopropyl. $R^3$ represents a hydrocarbon group and preferably is a hydrocarbon group having 1-3 carbon atoms. Examples thereof include methyl, ethyl, propyl, and isopropyl. Furthermore, n represents an integer of generally 0-5.

Examples of such aromatic vinyl compounds include styrene, α-methylstyrene, o-methylstyrene, m-methylstyrene, and p-methylstyrene.

With respect to the kinds of those polar-group-containing monomers and of those monomers containing no polar groups, the former monomers and the latter monomers each may be used alone or in combination of two or more thereof. In the case where a monomer containing no polar groups is to be copolymerized, it is preferred to use it in combination with one or more radical-polymerizable polar-group-containing monomers.

The propylene polymer of the invention shows satisfactory adhesiveness to polar substances and has surface hydrophilicity. It is preferred in this point that PP be a propylene homopolymer, a propylene/ethylene random copolymer, or a random copolymer of propylene and at least one α-olefin having 4-20 carbon atoms, and that R be a homopolymer of either (meth)acrylic acid or a derivative thereof, e.g., poly(methyl methacrylate), a copolymer of two or more monomers selected from (meth)acrylic acid and derivatives thereof, or a poly(cyclic ester) such as polycaprolactone.

More specifically, preferred examples of the propylene block copolymer include block copolymers in which PP is polypropylene, symbol a is an ester bond, and R is poly(acrylic acid), a styrene/maleic anhydride copolymer, or polyethylene glycol each having an Mw of 200-2,000,000.

[2] Production Processes

[2]-A Radical Polymerization Process via Terminal Modification with Group 13 Element

Processes for producing the propylene block copolymer of the invention are not particularly limited. For example, the copolymer can be produced by (i) conducting polymerization to obtain polypropylene (PP in formula (I)) in which the proportion of mmmm pentads to all pentads is 10-60%, (ii) subsequently bonding a Group 13 element to an end of the polypropylene to conduct terminal modification, and (iii) then conducting radical polymerization reaction in the presence of this polypropylene to thereby form a polar-group-containing polymer segment (R in formula (I)).

[2]-A-(i) Polymerization for Polypropylene Formation

The polypropylene to be used in the invention can be produced by coordination polymerization with a transition metal. For example, propylene is caused to homopolymerize or propylene and an olefin having 2-20 carbon atoms are copolymerized, in the presence of a known catalyst for olefin polymerization. The polypropylene produced here becomes the polypropylene segment in the propylene block copolymer.

· Catalyst

Examples of the known catalyst for olefin polymerization include $TiCl_3$ catalysts, $MgCl_2$-supported $TiCl_4$ catalysts, metallocene catalysts, and post-metallocene catalysts. It is preferred to use a metallocene catalyst. A preferred metallocene catalyst is a C1-symmetric metallocene represented by the following formula (V).

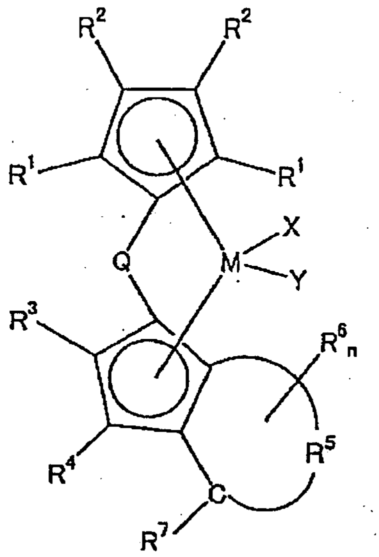

(V)

In formula (V), the two $R^1$'s are the same and the two $R^2$'s are the same; these are not limited as long as they are not excessively bulky. For example, they each are a hydrogen atom, hydrocarbon group, silicon-containing hydrocarbon group, or halogenated hydrocarbon group. The number of carbon atoms in the hydrocarbon group, silicon-containing hydrocarbon group, or halogenated hydrocarbon group is generally 1-10, preferably 1-8, most preferably 1-6.
Examples of the hydrocarbon group include alkyl groups such as methyl, ethyl, n-propyl, isopropyl, n-butyl, isobutyl, s-butyl, t-butyl, n-pentyl, n-hexyl, cyclopropyl, cyclopentyl, cyclohexyl, and methylcyclohexyl; alkenyl groups such as vinyl, propenyl, and cyclohexenyl; arylalkyl groups such as benzyl, phenylethyl, and phenylpropyl; arylalkenyl groups such as trans-styryl; and aryl groups such as phenyl, tolyl, dimethylphenyl, ethylphenyl, trimethylphenyl, 1-naphthyl, and 2-naphthyl.
Examples of the silicon-containing hydrocarbon group include trialkylsilyl groups such as trimethylsilyl, triethylsilyl, and t-butyldimethylsilyl; trialkylsilylmethyl groups such as trimethylsilylmethyl and triethylsilylmethyl; and di(alkyl)(aryl)silylmethyl groups such as dimethylphenylsilylmethyl and dimethyltolylsilylmethyl.
Although the halogen atom(s) of the halogenated hydrocarbon group are not particularly limited, the halogen is generally fluorine, chlorine, or bromine, and is preferably chlorine or fluorine. Examples of the halogenated hydrocarbon group include compounds formed by substituting the hydrocarbon groups shown above with one or more halogen atoms in any desired positions. Specific examples thereof include fluoromethyl, difluoromethyl, trifluoromethyl, chloromethyl, dichloromethyl, trichloromethyl, bromomethyl, dibromomethyl, tribromomethyl, iodomethyl, 2,2,2-trifluoroethyl, 2,2,1,1-tetrafluoroethyl, pentafluoroethyl, pentachloroethyl, pentafluoropropyl, nonafluorobutyl, trifluorovinyl, 1,1-difluorobenzyl, 1,1,2,2-tetrafluorophenylethyl, 2-, 3-, 4-fluorophenyl, 2-, 3-, 4-chlorophenyl, 2-, 3-, 4-bromophenyl, 2,4-, 3,5-, 2,6-, 2,5-difluorophenyl, 2,4-, 3,5-, 2,6-, 2,5-dichlorophenyl, 2,4,6-trifluorophenyl, 2,4,6-trichlorophenyl, pentafluorophenyl, pentachlorophenyl, 4-fluoronaphthyl, 4-chloronaphthyl, 2,4-difluoronaphthyl, heptafluoro-1-naphthyl, heptachloro-1-naphthyl, 2-, 3-, 4-trifluoromethylphenyl, 2-, 3-, 4-trichloromethylphenyl, 2,4-, 3,5-, 2,6-, 2,5-bis(trifluoromethyl)phenyl, 2, 4-, 3,5-, 2,6-, 2,5-bis(trichloromethyl)phenyl, and 2,4,6-tris(trifluoromethyl)phenyl. (In this description, partly abbreviated expressions of compounds are sometimes used as long as this does not cause misunderstanding. For example, "2-, 3-, 4-fluorophenyl" means three compounds, i.e., "2-fluorophenyl", "3-fluorophenyl", and "4-fluorophenyl".)

Preferred of those examples of $R^1$'s and $R^2$'s are a hydrogen atom; alkyl groups such as methyl, ethyl, n-propyl, isopropyl, n-butyl, isobutyl, s-butyl, t-butyl, cyclohexyl, and methylcyclohexyl; aryl groups such as phenyl; trialkylsilyl groups such as trimethylsilyl and triethylsilyl; or halogenated hydrocarbon groups such as fluoromethyl, difluoromethyl, trifluoromethyl, chloromethyl, dichloromethyl, trichloromethyl, 2,2,2-trifluoroethyl, 1,1,2,2-tetrafluoroethyl, pentafluoroethyl, pentachloroethyl, pentafluotopropyl, nonafluorobutyl, 2-, 3-, 4-fluorophenyl, and 2-, 3-, 4-chlorophenyl. More preferred are a hydrogen atom; alkyl groups having 1-6 carbon atoms, such as methyl, ethyl, n-propyl, isopropyl, n-butyl, s-butyl, t-butyl, and cyclohexyl; phenyl; trimethylsilyl; or halogenated hydrocarbon groups such as fluoromethyl, difluoromethyl, trifluoromethyl, chloromethyl, dichloromethyl, and trichloromethyl. Especially preferred is a hydrogen atom, an alkyl group having 1-6 carbon atoms, phenyl, or trimethylsilyl.

Adjacent ones of the $R^1$'s and $R^2$'s may be bonded to each other to form a ring. However, in the case where each of the two pair of $R^1$ and $R^2$ on the cyclopentadiene ring are bonded to each other to form rings, the rings formed are symmetrical with respect to the bridging position. The divalent group formed by the bonding of two substituents on the cyclopentadiene ring is a saturated or unsaturated, divalent hydrocarbon group having 3-9 carbon atoms, preferably 4-6 carbon atoms. Consequently, the ring formed is a 5- to 11-membered ring, preferably a 6- to 8-membered ring.

Examples of the divalent group formed by the bonding of two substituents on the pentadiene ring include divalent saturated hydrocarbon groups such as trimethylene, tetramethylene, pentamethylene, and hexamethylene; and divalent unsaturated hydrocarbon groups such as propenylene, 2-butenylene, 1,3-butadienylene, 1-pentenylene, 2-pentenylene, 1,3-pentadienylene, 1,4-pentadienylene, 1-hexenylene, 2-hexenylene, 3-hexenylene, 1,3-hexadienylene, 1,4-hexadienylene, 1,5-hexadienylene, 2,4-hexadienylene, 2,5-hexadienylene, and 1,3,5-hexatrienylene.

Preferred of those is trimethylene, tetramethylene, propenylene, 1,3-butadienylene, pentamethylene, 1,3-pentadienylene, 1,4-pentadienylene, or 1,3,5-hexatrienylene. More preferred is trimethylene, tetramethylene, propenylene, or 1,3-butadienylene. Especially preferred is tetramethylene or 1,3-butadienylene.

$R^3$ represents a hydrocarbon group, a silicon-containing hydrocarbon group, or a halogenated hydrocarbon group. $R^3$ preferably is smaller, and the number of carbon atoms therein is generally 1-10, preferably 1-8, more preferably 1-6, especially preferably 1-4.

Examples of the hydrocarbon group represented by $R^3$ include alkyl groups such as methyl, ethyl, n-propyl, isopropyl, n-butyl, isobutyl, s-butyl, t-butyl, n-pentyl, n-hexyl, cyclopropyl, cyclopentyl, and cyclohexyl; alkenyl groups such as vinyl, propenyl, and cyclohexenyl; and phenyl.

Examples of the silicon-containing hydrocarbon group represented by $R^3$ include trialkylsilyl groups such as trimethylsilyl, triethylsilyl, and t-butyldimethylsilyl.

The halogenated hydrocarbon group represented by $R^3$ is a group formed by substituting any of those hydrocarbon groups with one or more halogen atoms in any desired positions. The halogen atoms may be any of a fluorine atom, chlorine atoms, bromine atom, and iodine atom. Examples of the group include fluoromethyl, difluoromethyl, trifluoromethyl, chloromethyl, dichloromethyl, trichloromethyl, bromomethyl, dibromomethyl, tribromomethyl, iodomethyl, 2,2,2-trifluoroethyl, 2,2,1,1-tetrafluoroethyl, pentafluoroethyl, pentachloroethyl, pentafluoropropyl, nonafluorobutyl, trifluorovinyl, 2-, 3-, 4-fluorophenyl, 2-, 3-, 4-chlorophenyl, 2-, 3-, 4-bromophenyl, 2,4-, 3,5-, 2,6-, 2,5-difluorophenyl, 2,4-, 3,5-, 2, 6-, 2,5-dichlorophenyl, 2,4,6-trifluorophenyl, 2,4,6-trichlorophenyl, pentafluorophenyl, and pentachlorophenyl.

Especially preferred of those are hydrocarbon groups having 1-4 carbon atoms, such as methyl, ethyl, propyl, and butyl.

$R^4$ is a hydrogen atom, a hydrocarbon group, a silicon-containing hydrocarbon group, or a halogenated hydrocarbon group, and is especially preferably hydrogen.

Preferred of a hydrocarbon group, silicon-containing hydrocarbon group, and a halogenated hydrocarbon group is a hydrocarbon group. The size of such a group is not limited as long as it is not excessively bulky. The number of carbon atoms therein is generally 1-6, preferably 1-4.

Examples of the hydrocarbon group represented by $R^4$ include alkyl groups such as methyl, ethyl, n-propyl, isopropyl, n-butyl, isobutyl, s-butyl, t-butyl, n-pentyl, n-hexyl, cyclopropyl, cyclopentyl, and cyclohexyl; alkenyl groups such as vinyl, propenyl, and cyclohexenyl; and phenyl.

$R^5$ is a saturated or unsaturated, divalent hydrocarbon group having 4 or more carbon atoms. It generally is a saturated or unsaturated, divalent hydrocarbon group having 4-9 carbon atoms. Consequently, the fused ring formed is a 7- to 12-membered ring. Preferably, this fused ring is a 7- to 10-membered ring.

$R^6$ is not limited as long as it is not an especially bulky group. For example, $R^6$ represents a hydrogen atom, a hydrocarbon group, a silicon-containing hydrocarbon group, or a halogenated hydrocarbon group. The number of carbon atoms in the hydrocarbon group and in the silicon-containing hydrocarbon group or halogenated hydrocarbon group is generally 1-10, preferably 1-8, most preferably 1-6.

Examples of the hydrocarbon group include alkyl groups such as methyl, ethyl, n-propyl, isopropyl, n-butyl, isobutyl, s-butyl, t-butyl, n-pentyl, n-hexyl, cyclopropyl, cyclopentyl, cyclohexyl, and methylcyclohexyl; alkenyl groups such as vinyl, propenyl, and cyclohexenyl; arylalkyl groups such as benzyl, phenylethyl, and phenylpropyl; arylalkenyl groups such as trans-styryl; or aryl groups such as phenyl, tolyl, dimethylphenyl, ethylphenyl, trimethylphenyl, 1-naphthyl,

and 2-naphthyl.

Examples of the silicon-containing hydrocarbon group include trialkylsilyl groups such as trimethylsilyl, triethylsilyl, and t-butyldimethylsilyl; trialkylsilylmethyl groups such as trimethylsilylmethyl and triethylsilylmethyl; or di(alkyl)(aryl)silylmethyl groups such as dimethylphenylsilylmethyl and dimethyltolylsilylmethyl.

The halogenated hydrocarbon group is a compound formed by substituting any of the hydrocarbon groups shown above with one or more halogen atoms in any desired positions. The halogen is preferably fluorine, chlorine, or bromine, and is especially preferably fluorine or chlorine.

Specific examples of the halogenated hydrocarbon group include fluoromethyl, difluoromethyl, trifluoromethyl, chloromethyl, dichloromethyl, trichloromethyl, bromomethyl, dibromomethyl, tribromomethyl, iodomethyl, 2,2,2-trifluoroethyl, 2,2,1,1-tetrafluoroethyl, pentafluoroethyl, pentachloroethyl, pentafluoropropyl, nonafluorobutyl, trifluorovinyl, 1,1-difluorobenzyl, 1,1,2,2-tetrafluorophenylethyl, 2-, 3-, 4-fluorophenyl, 2-, 3-, 4-chlorophenyl, 2-, 3-, 4-bromophenyl, 2,4-, 3,5-, 2,6-, 2,5-difluorophenyl, 2,4-, 3,5-, 2,6-, 2,5-dichlorophenyl, 2,4,6-trifluorophenyl, 2,4,6-trichlorophenyl, pentafluorophenyl, pentachlorophenyl, 4-fluoronaphthyl, 4-chloronaphthyl, 2,4-difluoronaphthyl, heptafluoro-1-naphthyl, heptachloro-1-naphthyl, 2-, 3-, 4-trifluoromethylphenyl, 2-, 3-, 4-trichloromethylphenyl, 2,4-, 3,5-, 2,6-, 2,5-bis(trifluoromethyl)phenyl, 2,4-, 3,5-, 2,6-, 2,5-bis(trichloromethyl)phenyl, and 2,4,6-tris(trifluoromethyl)phenyl.

Preferred examples of $R^6$ are a hydrogen atom; alkyl groups such as methyl, ethyl, n-propyl, isopropyl, n-butyl, isobutyl, s-butyl, t-butyl, cyclohexyl, and methylcyclohexyl; aryl groups such as phenyl; trialkylsilyl groups such as trimethylsilyl and triethylsilyl; and halogenated hydrocarbon groups such as fluoromethyl, difluoromethyl, trifluoromethyl, chloromethyl, dichloromethyl, trichloromethyl, 2,2,2-trifluoroethyl, 2,2,1,1-tetrafluoroethyl, pentafluoroethyl, pentachloroethyl, pentafluoropropyl, nonafluorobutyl, 2-, 3-, 4-fluorophenyl, and 2-, 3-, 4-chlorophenyl. More preferred of these are a hydrogen atom; alkyl groups having 1-6 carbon atoms, such as methyl, ethyl, n-propyl, isopropyl, n-butyl, s-butyl, t-butyl, and cyclohexyl; phenyl; trimethylsilyl; or halogenated hydrocarbon groups such as fluoromethyl, difluoromethyl, trifluoromethyl, chloromethyl, dichloromethyl, and trichloromethyl. Especially preferred is a hydrogen atom, an alkyl group having 1-6 carbon atoms, phenyl, or trimethylsilyl.

$R^7$ is an organic group which is not bulky. It preferably is smaller. For example, $R^7$ is a hydrocarbon group, halogenated hydrocarbon group, or silicon-containing hydrocarbon group which has 1-5, especially 1-3 carbon atoms.

Examples of the hydrocarbon group include alkyl groups such as methyl, ethyl, n-propyl, isopropyl, n-butyl, isobutyl, s-butyl, t-butyl, n-pentyl, cyclopropyl, and cyclopentyl; or alkenyl groups such as vinyl and propenyl.

The halogenated hydrocarbon group is a group formed by substituting any of the hydrocarbon groups shown above with one or more halogen atoms in any desired positions. The halogen atoms may be any of fluorine, chlorine, bromine, and iodine atoms.

Examples of the halogenated hydrocarbon group include fluoromethyl, difluoromethyl, trifluoromethyl, chloromethyl, dichloromethyl, trichloromethyl, bromomethyl, dibromomethyl, tribromomethyl, iodomethyl, 2,2,2-trifluoroethyl, 2,2,1,1-tetrafluoroethyl, pentafluoroethyl, pentachloroethyl, pentafluoropropyl, nonafluorobutyl, and trifluorovinyl.

Examples of the silicon-containing hydrocarbon group include trialkylsilyl groups such as trimethylsilyl; or trialkylsilylmethyl groups such as trimethylsilylmethyl.

Preferred of those are methyl, ethyl, n-propyl, isopropyl, n-butyl, isobutyl, s-butyl, t-butyl, n-pentyl, vinyl, propenyl, cyclopropyl, cyclopentyl, fluoromethyl, difluoromethyl, trifluoromethyl, chloromethyl, dichloromethyl, trichloromethyl, bromomethyl, dibromomethyl, tribromomethyl, iodomethyl, 2,2,2-trifluoroethyl, 2,2,1,1-tetrafluoroethyl, pentafluoroethyl, pentachloroethyl, pentafluoropropyl, nonafluorobutyl, trifluorovinyl, and trimethylsilyl. More preferred are methyl, ethyl, n-propyl, isopropyl, n-butyl, isobutyl, s-butyl, n-pentyl, n-hexyl, cyclopropyl, cyclopentyl, fluoromethyl, difluoromethyl, trifluoromethyl, chloromethyl, dichloromethyl, trichloromethyl, 2,2,2-trifluoroethyl, 2,2,1,1-tetrafluoroethyl, pentafluoroethyl, pentachloroethyl, pentafluoropropyl, and nonafluorobutyl. Especially preferred are methyl, ethyl, n-propyl, isopropyl, n-butyl, isobutyl, s-butyl, fluoromethyl, difluoromethyl, trifluoromethyl, chloromethyl, dichloromethyl, trichloromethyl, 2,2,2-trifluoroethyl, 2,2,1,1-tetrafluoroethyl, pentafluoroethyl, pentachloroethyl, pentafluoropropyl, and nonafluorobutyl.

Examples of the substituent formed by the $R^7$-bonded carbon and $R^5$ and fused to the cyclopentadienyl ring include divalent saturated hydrocarbon groups such as pentamethylene and hexamethylene; or divalent unsaturated hydrocarbon groups such as 1-pentenylene, 2-pentenylene, 1,3-pentadienylene, 1,4-pentadienylene, 1-hexenylene, 2-hexenylene, 3-hexenylene, 1,3-hexadienylene, 1,4-hexadienylene, 1,5-hexadienylene, 2,4-hexadienylene, 2,5-hexadienylene, and 1,3,5-hexatrienylene.

Preferred of those is pentamethylene, 1,3-pentadienylene, 1,4-pentadienylene, or 1,3,5-hexatrienylene. More preferred is pentamethylene, 1,3-pentadienylene, or 1,4-pentadienylene. Especially preferred is pentamethylene or 1,3-pentadienylene.

Symbol n is 0 or an integer not larger than two times the number of carbon atoms in $R^5$. Preferably, n is 0-5. When n is an integer of 2 or larger, the $R^6$ groups may be the same or different. Furthermore, when n is an integer of 2 or larger, the $R^6$'s may be bonded to each other to form a new ring structure.

Q is a bridging group. For example, Q is a divalent hydrocarbon group or a silylene, origosilylene, or germylene

group which may have one or more hydrocarbon groups. Preferably, Q is either a divalent hydrocarbon group having 1-20 carbon atoms or a silylene, oligosilylene, or germylene group which may have one or more hydrocarbon groups having 1-20 carbon atoms. When the silylene, oligosilylene, or germylene group has two hydrocarbon groups thereon, these hydrocarbon groups may be bonded to each other to form a ring structure.

Examples of Q include alkylene groups such as methylene, dimethylmethylene, 1,2-ethylene, 1,3-trimethylene, 1,4-tetramethylene, 1,2-cyclohexylene, and 1,4-cyclohexylene; arylalkylene groups such as diphenylmethylene; silylene; alkylsilylene groups such as dimethylsilylene, diethylsilylene, di(n-propyl)silylene, di(isopropyl)silylene, and di(cyclohexyl)silylene; arylsilylene groups such as diphenylsilylene; alkyloligosilylenes such as tetramethyldisilylene; germylene; and alkylgermylene or arylgermylene groups formed by replacing the silicon of each of the silylene groups having divalent hydrocarbon groups having 1-20 carbon atoms by germanium. Preferred of these are the alkylene groups having 1-20 carbon atoms, the silylene groups having hydrocarbon groups with 1-20 carbon atoms, or the germylene groups having hydrocarbon groups with 1-20 carbon atoms. Especially preferred are dimethylmethylene, 1,2-ethylene, 1,4-tetramethylene, dimethylsilylene, diethylsilylene, diphenylsilylene, dimethylgermylene, diethylgermylene, and diphenylgermylene.

X and Y each independently is a ligand which forms a σ-bond with M. Examples thereof include a hydride, halide, hydrocarbon group, halogenated hydrocarbon group, silicon-containing hydrocarbon group, oxygen-containing hydrocarbon group, amino group, and substituted amino or nitrogen-containing hydrocarbon group. The number of carbon atoms in each of the hydrocarbon group, halogenated hydrocarbon group, silicon-containing hydrocarbon group, oxygen-containing hydrocarbon group, substituted amino group, and nitrogen-containing hydrocarbon group is preferably 1-20.

The halide may be any of fluoride, chloride, bromine, and iodide.

Examples of the hydrocarbon group include alkyl groups such as methyl, ethyl, n-propyl, isopropyl, n-butyl, isobutyl, s-butyl, t-butyl, n-pentyl; n-hexyl, cyclopropyl, cyclopentyl, cyclohexyl, and methylcyclohexyl; alkenyl groups such as vinyl, propenyl, and cyclohexenyl; arylalkyl groups such as benzyl, phenylethyl, and phenylpropyl; arylalkenyl groups such as trans-styryl; or aryl groups such as phenyl, tolyl, dimethylphenyl, ethylphenyl, trimethylphenyl, 1-naphthyl, 2-naphthyl, acenaphthyl, phenanthryl, and anthryl.

Examples of the oxygen-containing hydrocarbon group include alkoxy groups such as methoxy, ethoxy, propoxy, cyclopropoxy, and butoxy; aryloxy groups such as phenoxy, methylphenoxy, dimethylphenoxy, and naphthoxy; arylalkoxy groups such as phenylmethoxy and naphthylmethoxy; or oxygen-containing heterocyclic groups such as furyl.

Examples of the substituted amino group or nitrogen-containing hydrocarbon group include alkylamino groups such as methylamino, dimethylamino, ethylamino, and diethylamino; arylamino groups such as phenylamino and diphenylamino; or N-alkyl-N-arylamino groups such as N-methyl-N-phenylamino and nitrogen-containing heterocyclic groups such as pyrazolyl and indolyl.

Examples of the halogenated hydrocarbon group include ones formed by substituting the hydrocarbon groups shown above with one or more halogen atoms in any desired positions. The halogen atoms may be any of fluorine, chlorine, bromine, and iodine atoms. Specific examples thereof include fluoromethyl, difluoromethyl, trifluoromethyl, chloromethyl, dichloromethyl, trichloromethyl, bromomethyl, dibromomethyl, tribromomethyl, iodomethyl, 2,2,2-trifluoroethyl, 2,2,1,1-tetrafluoroethyl, pentafluoroethyl, pentachloroethyl, pentafluoropropyl, nonafluorobutyl, trifluorovinyl, 1,1-difluorobenzyl, 1,1,2,2-tetrafluorophenylethyl, 2-, 3-, 4-fluorophenyl, 2-, 3-, 4-chlorophenyl, 2-, 3-, 4-bromophenyl, 2,4-, 3,5-, 2,6-, 2,5-difluorophenyl, 2,4-, 3,5-, 2,6-, 2,5-dichlorophenyl, 2,4,6-trifluorophenyl, 2,4,6-trichlorophenyl, pentafluorophenyl, pentachlorophenyl, 4-fluoronaphthyl, 4-chloronaphthyl, 2,4-difluoronaphthyl, heptafluoro-1-naphthyl, heptachloro-1-naphthyl, 2-, 3-, 4-trifluoromethylphenyl, 2-, 3-, 4-trichloromethylphenyl, 2,4-, 3,5-, 2,6-, 2,5-bis(trifluoromethyl)phenyl, 2,4-, 3,5-, 2,6-, 2,5-bis(trichloromethyl)phenyl, 2,4,6-tris(trifluoromethyl)phehyl, 4-trifluoromethylnaphthyl, 4-trichloromethylnaphthyl, and 2,4-bis(trifluoromethyl)naphthyl.

Examples of the silicon-containing hydrocarbon group include trialkylsilylmethyl groups such as trimethylsilylmethyl and triethylsilylmethyl and di(alkyl)(aryl)silylmethyl groups such as dimethylphenylsilylmethyl, diethylphenylsilylmethyl, and dimethyltolylsilylmethyl.

Preferably, X and Y are a hydride, a halogen atom, a hydrocarbon group having 1-20 carbon atoms, or a substituted amino group or nitrogen-containing hydrocarbon group having 1-20 carbon atoms. Especially preferred of these is a hydride, chloride, methyl, isobutyl, phenyl, benzyl, dimethylamino group, or diethylamino group.

M represents a transition metal in Groups 4-6 of the periodic table. M preferably is a Group 4 transition metal selected from titanium, zirconium, and hafnium, and more preferably is zirconium or hafnium.

Preferred of the C1-symmetric transition metal compounds usable for polymerization for producing the propylene segment according to the invention are C1-symmetric transition metal compounds in which $R^5$ has 4 carbon atoms and which are represented by the following formula (VI) or (VII).

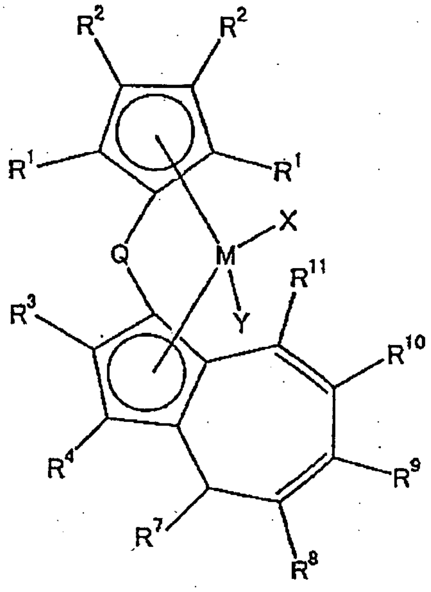

(VI)

In formula (VI), $R^1$ to $R^4$, $R^7$, Q, X, and Y have the same meanings as in formula (V). $R^8$ to $R^{11}$ each independently are a hydrogen atom, a hydrocarbon group, a silicon-containing hydrocarbon group, or a halogenated hydrocarbon group, provided that any adjacent substituents may be bonded to each other to form a ring. M is a transition metal in Groups 4-6 of the periodic table, preferably in Group 4.

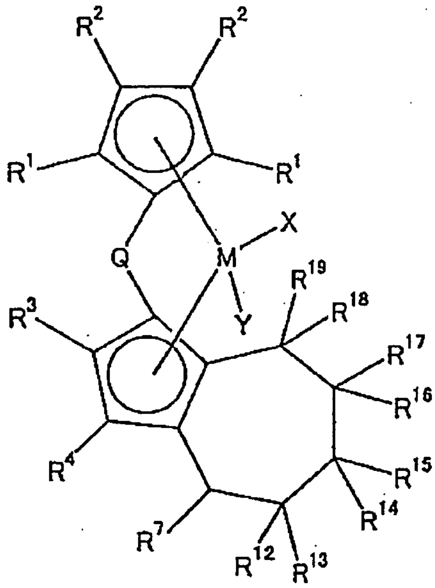

(VII)

In formula (VII), $R^1$ to $R^4$, $R^7$, Q, X, and Y have the same meanings as in formula (V). $R^{12}$ to $R^{19}$ each independently are a hydrogen atom, a hydrocarbon group, a silicon-containing hydrocarbon group, or a halogenated hydrocarbon group, provided that any adjacent substituents may be bonded to each other to form a ring. M is a transition metal in Groups 4-6 of the periodic table, preferably in Group 4.

Of the compounds represented by formula (VI) or (VII) according to the invention, examples of the compounds in which M is hafnium include the following transition metal compounds (1) to (156). Especially preferred of these is the compound represented by the following formula (VIII) .

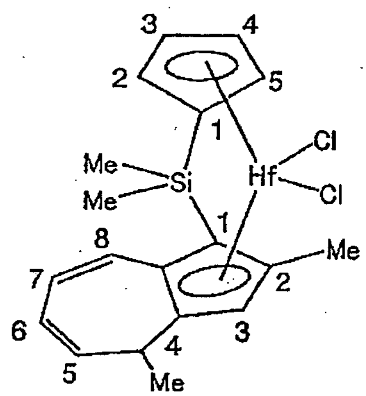

(V I I I)

(1) Dichloro[dimethylsilylene(cyclopentadienyl)(2,4-dimethyl-4H-1-azulenyl)]hafnium, (2) dichloro[dimethylsilylene (2,5-dimethyl-1-cyclopentadienyl)(2,4-dimethyl-4H-1-azulenyl)]hafnium, (3) dichloro[dimethylsilylene(cyclopentadienyl)(2-methyl-4-isopropyl-4H-1-azulenyl)]hafnium, (4) dichloro[dimethylsilylene(2,5-diethyl-1-cyclopentadienyl) (2,4-dimethyl-4H-1-azulenyl)]hafnium, (5) dichloro[dimethylsilylene(3,4-dimethyl-1-cyclopentadienyl)(2,4-dimethyl-4H-1-azulenyl)]hafnium, (6) dichloro[dimethylsilylene(9-fluorenyl)(2,4-dimethyl-4H-1-azulenyl)]hafnium, (7) dichloro [dimethylsilylene(cyclopentadienyl)(2-ethyl-4-methyl-4H-1-azulenyl)]hafnium, (8) dichloro[dimethylsilylene (2,5-dimethyl-1-cyclopentadienyl)(2-ethyl-4-methyl-4H-1-azulenyl)]hafnium, (9) dichloro[dimethylsilylene(cyclopentadienyl)(2-ethyl-4-isopropyl-4H-1-azulenyl)]hafnium, (10) dichloro[dimethylsilylene(9-fluorenyl)(2-ethyl-4-methyl-4H-1-azulenyl)]hafnium, (11) dichloro[dimethylsilylene(3,4-dimethyl-1-cyclopentadienyl)(2-ethyl-4-methyl-4H-1-azulenyl)]hafnium, (12) dichloro[dimethylsilylene(9-fluorenyl)(2-methyl-4-isopropyl-4H-1-azulenyl)]hafnium, (13) dichloro[dimethylsilylene(9-fluorenyl)(2-ethyl-4-isopropyl-4H-1-azulenyl)]hafnium, (14) dichloro[dimethylsilylene(3,4-dimethyl-1-cyclopentadienyl)(2-n-propyl-4-methyl-4H-1-azulenyl)]hafnium, (15) dichloro[dimethylsilylene(9-fluorenyl)(2-n-propyl-4-methyl-4H-1-azulenyl)]hafnium, (16) dichloro[ethylene(cyclopentadienyl) (2,4-dimethyl-4H-1-azulenyl)]hafnium, (17) dichloro[ethylene(2,5-dimethyl-1-cyclopentadienyl)(2,4-dimethyl-4H-1-azulenyl)]hafnium, (18) dichloro[ethylene(cyclopentadienyl)(2-methyl-4-isopropyl-4H-1-azulenyl)]hafnium, (19) dichloro[ethylene(2,5-diethyl-1-cyclopentadienyl)(2,4-dimethyl-4H-1-azulenyl)]hafnium, (20) dichloro[ethylene (3,4-dimethyl-1-cyclopentadienyl)(2,4-dimethyl-4H-1-azulenyl)]hafnium, (21) dichloro[ethylene(9-fluorenyl) (2,4-dimethyl-4H-1-azulenyl)]hafnium, (22) dichloro[ethylene(cyclopentadienyl)(2-ethyl-4-methyl-4H-1-azulenyl)] hafnium, (23) dichloro[ethylene(2,5-dimethyl-1-cyclopentadienyl)(2-ethyl-4-methyl-4H-1-azulenyl)]hafnium, (24) dichloro[ethylene(cyclopentadienyl)(2-ethyl-4-isopropyl-4H-1-azulenyl)]hafnium, (25) dichloro[ethylene(9-fluorenyl) (2-ethyl-4-methyl-4H-1-azulenyl)] hafnium, (26) dichloro[ethylene(3,4-dimethyl-1-cyclopentadienyl)(2-ethyl-4-methyl-4H-1-azulenyl)]hafnium, (27) dichloro[ethylene(9-fluorenyl)(2-methyl-4-isopropyl-4H-1-azulenyl)]hafnium, (28) dichloro[ethylene(9-fluorenyl)(2-ethyl-4-isopropyl-4H-1-azulenyl)]hafnium, (29) dichloro[ethylene(3,4-dimethyl-1-cyclopentadienyl)(2-n-propyl-4-methyl-4H-1-azulenyl)]hafnium, (30) dichloro[ethylene(9-fluorenyl)(2-n-propyl-4-methyl-4H-1-azulenyl)]hafnium, (31) dichloro[dimethylsilylene(2,5-dimethyl-1-cyclopentadienyl)(2-ethyl-4-isopropyl-4H-1-azulenyl)]hafnium, (32) dichloro[dimethylsilylene(cyclopentadienyl)(2-n-propyl-4-methyl-4H-1-azulenyl)] hafnium, (33) dichloro[dimethylsilylene(cyclopentadienyl)(2-isopropyl-4-methyl-4H-1-azulenyl)]hafnium, (34) dichloro[dimethylsilylene(cyclopentadienyl)(2-n-butyl-4-methyl-4H-1-azulenyl)]hafnium, (35) dichloro[dimethylsilylene(2,5-dimethyl-1-cyclopentadienyl)(2-n-propyl-4-methyl-4H-1-azulenyl)]hafnium, (36) dichloro[dimethylsilylene(2,5-dimethyl-1-cyclopentadienyl)(2-isopropyl-4-methyl-4H-1-azulenyl)]hafnium, (37) dichloro[dimethylsilylene(2,5-dimethyl-1-cyclopentadienyl)(2-n-butyl-4-methyl-4H-1-azulenyl)]hafnium, (38) dichloro[dimethylsilylene (cyclopentadienyl)(2,4,8-trimethyl-4H-1-azulenyl)]hafnium, (39) dichloro[dimethylsilylene(cyclopentadienyl) (2,4-dimethyl-8-isopropyl-4H-1-azulenyl)]hafnium, (40) dichloro[dimethylsilylene(cyclopentadienyl)(2,4-dimethyl-8-ethyl-4H-1-azulenyl)]hafnium, (41) dichloro[dimethylmethylene(cyclopentadienyl)(2,4-dimethyl-4H-1-azulenyl)] hafnium, (42) dichloro[dimethylmethylene(2,5-dimethyl-1-cyclopentadienyl)(2,4-dimethyl-4H-1-azulenyl)]hafnium, (43) dichloro[dimethylmethylene(3,4-dimethyl-1-cyclopentadienyl)(2,4-dimethyl-4H-1-azulenyl)]hafnium, (44) dichloro[dimethylmethylene(9-fluorenyl)(2,4-dimethyl-4H-1-azulenyl)]hafnium, (45) dichloro[dimethylgermylene(cyclopentadienyl)(2,4-dimethyl-4H-1-azulenyl)]hafnium, (46) dichloro[dimethylgermylene(2,5-dimethyl-1-cyclopentadienyl)(2,4-dimethyl-4H-1-azulenyl)]hafnium, (47) dichloro[dimethylgermylene(3,4-dimethyl-1-cyclopetadienyl) (2,4-dimethyl-4H-1-azulenyl)]hafnium, (48) dichloro[dimethylgermylene(9-fluorenyl)(2,4-dimethyl-4H-1-azulenyl)] hafnium, (49) dichloro[dimethylgermylene(cyclopentadienyl)(2-ethyl-4-methyl-4H-1-azulenyl)]hafnium, (50) dichloro[dimethylgermylene(cyclopentadienyl)(2-n-propyl-4-methyl-4H-1-azulenyl)]hafnium, (51) dichloro[dimethylgermylene(cyclopentadienyl)(2-isopropyl-4H-1-azulenyl)]hafnium, (52) dichloro[dimethylgermylene(cyclopentadienyl)(2-n-butyl-4-methyl-4H-1-azulenyl)]hafnium, (53) dichloro[dimethylgermylene(2,5-dimethyl-1-cyclopentadienyl)(2-ethyl-4-methyl-4H-1-azulenyl)]hafnium, (54) dichloro[dimethylgermylene(3,4-dimethyl-1-cyclopentadienyl)(2-ethyl-4-methyl-4H-1-azulenyl)]hafnium, (55) dichloro[dimethylgermylene(9-fluorenyl)(2-ethyl-4-methyl-4H-1-azulenyl)]hafnium, (56) dichloro[dimethylgermylene(2,5-dimethyl-1-cyclopentadienyl)(2-n-propyl-4-methyl-4H-1-azulenyl)]hafnium, (57) dichloro[dimethylgermylene(3,4-dimethyl-1-cyclopentadienyl)(2-n-propyl-4-methyl-4H-1-azulenyl)]hafnium, (58) dichloro[dimethylgermylene(9-fluorenyl)(2-n-propyl-4-methyl-4H-1-azulenyl)]hafnium, (59) dichloro[dimethylsilylene(3,4-bis(trimethylsilyl)-1-cyclopentadienyl)(2,4-dimethyl-4H-1-azulenyl)]hafnium, (60) dichloro[dimethylsilylene(3,4-bis(trimethylsilyl)-1-cyclopentadienyl)(2-ethyl-4-methyl-4H-1-azulenyl)]hafnium, (61) dichloro[dimethylgermylene(3,4-bis(trimethylsilyl)-1-cyclopentadienyl)(2,4-dimethyl-4H-1-azulenyl)]hafnium, (62) dichloro [dimethylgermylene (3,4-bis (trimethylsilyl)- 1-cyclopentadienyl) (2-ethyl- 4-methyl- 4H- 1-azulenyl)] hafnium, (63) dimethyl[dimethylsilylene(cyclopentadienyl)(2,4-dimethyl-4H-1-azulenyl)]hafnium, (64) dimethyl[dimethylsilylene(2,5-dimethyl-1-cyclopentadienyl)(2,4-dimethyl-4H-1-azulenyl)]hafnium, (65) dimethyl[dimethylsilylene (3,4-dimethyl-1-cyclopentadienyl)(2,4-dimethyl-4H-1-azulenyl)]hafnium, (66) dimethyl[dimethylsilylene(9-fluorenyl)(2,4-dimethyl-4H-1-azulenyl)]hafnium, (67) [dimethylsilylene(cyclopentadienyl)(2,4-dimethyl-4H-1-azulenyl)]hafnium dihydride, (68) [dimethylsilylene(2,5-dimethyl-1-cyclopentadienyl)(2,4-dimethyl-4H-1-azulenyl)]hafnium dihydride, (69) [dimethylsilylene(3,4-dimethyl-1-cyclopentadienyl)(2,4-dimethyl-4H-1-azulenyl)]hafnium dihydride, (70) [dimethylsilylene(9-fluorenyl)(2,4-dimethyl-4H-1-azulenyl)]hafnium dihydride, (71) bis(dimethylamido)[dimethylsilylene(cyclopentadienyl)(2,4-dimethyl-4H-1-azulenyl)]hafnium, (72) bis(dimethylamido)[dimethylsilylene(2,5-dimethyl-1-cyclopentadienyl)(2,4-dimethyl-4H-1-azulenyl)]hafnium, (73) bis(dimethylamido)[dimethylsilylene(3,4-dimethyl-1-cyclopentadienyl)(2,4-dimethyl-4H-1-azulenyl)]hafnium, (74) bis(dimethylamido)[dimethylsilylene(9-fluorenyl)(2,4-dimethyl-4H-1-azulenyl)]hafnium, (75) dichloro[dimethylsilylene(cyclopentadienyl)(2-methyl-4-chloromethyl-4H-1-azulenyl)]hafnium, (76) dichloro[dimethylsilylene(2,5-dimethyl-1-cyclopentadienyl)(2-methyl-4-chloromethyl-4H-1-azulenyl)]hafnium, (77) dichloro[dimethylsilylene(3,4-dimethyl-1-cyclopentadienyl)(2-methyl-4-chloromethyl-4H-1-azulenyl)]hafnium, (78) dichloro[dimethylsilylene(9-fluorenyl)(2-methyl-4-chloromethyl-4H-1-azulenyl)]hafnium, (79) dichloro[dimethylsilylene(cyclopentadienyl)(2,4-dimethyl-4H-5,6,7,8-tetrahydro-1-azulenyl)]hafnium, (80) dichloro[dimethylsilylene(2,5-dimethyl-1-cyclopentadienyl)(2,4-dimethyl-4H-5,6,7,8-tetrahydro-1-azulenyl)]hafnium, (81) dichloro[dimethylsilylene(cyclopentadienyl)(2-methyl-4-isopropyl-4H-5,6,7,8-tetrahydro-1-azulenyl)]hafnium, (82) dichloro[dimethylsilylene(2,5-diethyl-1-cyclopentadienyl)(2,4-dimethyl-4H-5,6,7,8-tetrahydro-1-azulenyl)]hafnium, (83) dichloro[dimethylsilylene(3,4-dimethyl-1-cyclopentadienyl)(2,4-dimethyl-4H-5,6,7,8-tetrahydro-1-azulenyl)]hafnium, (84) dichloro[dimethylsilylene(9-fluorenyl)(2,4-dimethyl-4H-5,6,7,8-tetrahydro-1-azulenyl)]hafnium, (85) dichloro[dimethylsilylene(cyclopentadienyl)(2-ethyl-4-methyl-4H-5,6,7,8-tetrahydro-1-azulenyl)]hafnium, (86) dichloro[dimethylsilylene(2,5-dimethyl-1-cyclopentadienyl)(2-ethyl-4-methyl-4H-5,6,7,8-tetrahydro-1-azulenyl)]hafnium, (87) dichloro[dimethylsilylene(cyclopentadienyl)(2-ethyl-4-isopropyl-4H-5,6,7,8-tetrahydro-1-azulenyl)]hafnium, (88) dichloro[dimethylsilylene(9-fluorenyl)(2-ethyl-4-methyl-4H-5,6,7,8-tetrahydro-l-azulenyl)]hafnium, (89) dichloro[dimethylsilylene(3,4-dimethyl-1-cyclopentadienyl)(2-ethyl-4-methyl-4H-5,6,7,8-tetrahydro-1-azulenyl)]hafnium, (90) dichloro(dimethylsilylene(9-fluorenyl)(2-methyl-4-isopropyl-4H-5,6,7,8-tetrahydro-1-azulenyl)]hafnium, (91) dichloro[dimethylsilylene(9-fluorenyl)(2-ethyl-4-isopropyl-4H-5,6,7,8-tetrahydro-1-azulenyl)]hafnium, (92) dichloro[dimethylsilylene(3,4-dimethyl-1-cyclopentadienyl)(2-n-propyl-4-methyl-4H-5,6,7,8-tetrahydro-1-azulenyl)]hafnium, (93) dichloro[dimethylsilylene(9-fluorenyl)(2-n-propyl-4-methyl-4H-5,6,7,8-tetrahydro-1-azulenyl)]hafnium, (94) dichloro[ethylene(cyclopentadienyl)(2,4-dimethyl-4H-5,6,7,8-tetrahydro-1-azulenyl)]hafnium, (95) dichloro[ethylene(2,5-dimethyl-1-cyclopentadienyl)(2,4-dimethyl-4H-5,6,7,8-tetrahydro-1-azulenyl)]hafnium, (96) dichloro[ethylene(cyclopentadienyl)(2-methyl-4-isopropyl-4H-5,6,7,8-tetrahydro-1-azulenyl)]hafnium, (97) dichloro [ethylene(2,5-diethyl-1-cyclopentadienyl)(2,4-dimethyl-4H-5,6,7,8-tetrahydro-1-azulenyl)]hafnium, (98) dichloro [ethylene(3,4-dimethyl-1-cyclopentadienyl)(2,4-dimethyl-4H-5,6,7,8-tetrahydro-1-azulenyl)]hafnium, (99) dichloro [ethylene(9-fluorenyl)(2,4-dimethyl-4H-5,6,7,8-tetrahydro-1-azulenyl)]hafnium, (100) dichloro[ethylene(cyclopentadienyl)(2-ethyl-4-methyl-4H-5,6,7,8-tetrahydro-1-azulenyl)]hafnium, (101) dichloro[ethylene(2,5-dimethyl-1-cyclopentadienyl)(2-ethyl-4-methyl-4H-5,6,7,8-tetrahydro-1-azulenyl)]hafnium, (102) dichloro[ethylene(cyclopentadienyl)(2-ethyl-4-isopropyl-4H-5,6,7,8-tetrahydro-1-azulenyl)]hafnium, (103) dichloro[ethylene(9-fluorenyl)(2-ethyl-4-methyl-4H-5,6,7,8-tetrahydro-1-azulenyl)]hafnium, (104) dichloro[ethylene(3,4-dimethyl-1-cyclopentadienyl)(2-ethyl-4-methyl-4H-5,6,7,8-tetrahydro-1-azulenyl)]hafnium, (105) dichloro[ethylene(9-fluorenyl)(2-methyl-4-isopropyl-4H-5,6,7,8-tetrahydro-1-azulenyl)]hafnium, (106) dichloro[ethylene(9-fluorenyl)(2-ethyl-4-isopropyl-4H-5,6,7,8-tetrahydro-1-azulenyl)]hafnium, (107) dichloro[ethylene(3,4-dimethyl-1-cyclopentadienyl)-(2-n-propyl-4-methyl-4H-5,6,7,8-tetrahydro-1-azulenyl)]hafnium, (108) dichloro[ethylene(9-fluorenyl)(2-n-propyl-4-methyl-4H-5,6,7,8-tetrahydro-1-azulenyl)]hafnium, (109) dichloro[dimethylsilylene(2,5-dimethyl-1-cyclopentadienyl)(2-ethyl-4-isopropyl-4H-5,6,7,8-tetrahydro-1-azulenyl)]hafnium, (110) dichloro[dimethylsilylene(cyclopentadienyl)(2-n-propyl-4-methyl-4H-5,6,7,8-tetrahydro-1-azulenyl)]hafnium, (111) dichloro[dimethylsilylene(cyclopentadienyl)(2-isopropyl-4-methyl-4H-5,6,7,8-tetrahydro-1-azulenyl)]hafnium, (112) dichloro[dimethylsilylene(cyclopentadienyl)(2-n-butyl-4-methyl-4H-5,6,7,8-tetrahydro-1-azulenyl)]hafnium, (113) dichloro[dimethylsilylene(2,5-dimethyl-1-cyclopentadienyl)(2-n-propyl-4-methyl-4H-5,6,7,8-tetrahydro-1-azulenyl)]hafnium, (114) dichloro[dimethylsilylene (2,5-dimethyl-1-cyclopentadienyl)(2-isopropyl-4-methyl-4H-5,6,7,8-tetrahydro-1-azulenyl)]hafnium, (115) dichloro [dimethylsilylene(2,5-dimethyl-1-cyclopentadienyl)(2-n-butyl-4-methyl-4H-5,6,7,8-tetrahydro-1-azulenyl)]hafnium, (116) dichloro[dimethylsilylene(,cyclopentadienyl)(2,4;8-trimethyl-4H-5,6,7,8-tetrahydro-1-azulenyl)]hafnium, (117) dichloro [dimethylsilylene (cyclopentadienyl) (2,4-dimethyl-8-isopropyl-4H-5,6,7,8-tetrahydro-1-azulenyl)] hafnium, (118) dichloro[dimethylsilylene(cyclopentadienyl)(2,4-dimethyl-8-ethyl-4H-5,6,7,8-tetrahydro-l-azulenyl)]hafnium, (119) dichloro[dimethylmethylene(cyclopentadienyl)(2,4-dimethyl-4H-5,6,7,8-tetrahydro-1-azulenyl)]hafnium, (120) dichloro[dimethylmethylene(2,5-dimethyl-1-cyclopentadienyl)(2,4-dimethyl-4H-5,6,7,8-tetrahydro-1-azulenyl)]hafnium, (121) dichloro[dimethylmethylene(3,4-dimethyl-1-cyclopentadienyl)(2,4-dimethyl-4H-5,6,7,8-tetrahydro-1-azulenyl)]hafnium, (122) dichloro[dimethylmethylene(9-fluorenyl)(2,4-dimethyl-4H-5,6,7,8-tetrahydro-1-azulenyl)]hafnium, (123) dichloro[dimethylgermylene(cyclopentadienyl)(2,4-dimethyl-4H-5,6,7,8-tetrahydro-1-azulenyl)] hafnium, (124) dichloro[dimethylgermylene(2,5-dimethyl-1-cyclopentadienyl)(2,4-dimethyl-4H-5,6,7,8-tetrahydro-1-azulenyl)]hafnium, (125) dichloro[dimethylgermylene(3,4-dimethyl-1-cyclopetadienyl)(2,4-dimethyl-4H-5,6,7,8-tetrahydro-1-azulenyl)]hafnium, (126) dichloro[dimethylgermylene(9-fluorenyl)(2,4-dimethyl-4H-5,6,7,8-tetrahydro-1-azulenyl)]hafnium, (127) dichloro[dimethylgermylene(cyclopentadienyl)(2-ethyl-4-methyl-4H-5,6,7,8-tetrahydro-1-azulenyl)]hafnium, (128) dichloro[dimethylgermylene(cyclopentadienyl)(2-n-propyl-4-methyl-4H-5,6,7,8-tetrahydro-1-azulenyl)]hafnium, (129) dichloro[dimethylgermylene(cyclopentadienyl)(2-isopropyl-4H-5,6,7,8-tetrahydro-1-azulenyl)]hafnium, (130) dichloro[dimethylgermylene(cyclopentadienyl)(2-n-butyl-4-methyl-4H-5,6,7,8-tetrahydro-1-azulenyl)]hafnium, (131) dichloro[dimethylgermylene(2,5-dimethyl-1-cyclopentadienyl) (2-ethyl-4-methyl-4H-5,6,7,8-tetrahydro-1-azulenyl)]hafnium, (132) dichloro[dimethylgermylene(3,4-dimethyl-1-cyclopentadienyl)(2-ethyl-4-methyl-4H-5,6,7,8-tetrahydro-1-azulenyl)]hafnium, (133) dichloro[dimethylgermylene (9-fluorenyl)(2-ethyl-4-methyl-4H-5,6,7,8-tetrahydro-1-azulenyl)]hafnium, (134) dichloro[dimethylgermylene (2,5-dimethyl-1-cyclopentadienyl) (2-n-propyl-4-methyl-4H-5,6,7,8-tetrahydro-1-azulenyl)]hafnium, (135) dichloro [dimethylgermylene(3,4-dimethyl-1-cyclopentadienyl) (2-n-propyl-4-methyl-4H-5,6,7,8-tetrahydro-1-azulenyl)]hafnium, (136) dichloro[dimethylgermylene(9-fluorenyl)(2-n-propyl-4-methyl-4H-5,6,7,8-tetrahydro-1-azulenyl)]hafnium, (137) dichloro[dimethylsilylene(3,4-bis(trimethylsilyl)-1-cyclopentadienyl)(2,4-dimethyl-4H-5,6,7,8-tetrahydro-1-azulenyl)]hafnium, (138) dichloro[dimethylsilylene(3,4-bis(trimethylsilyl)-1-cyclopentadienyl)(2-ethyl-4-methyl-4H-5,6,7,8-tetrahydro-1-azulenyl)]hafnium, (139) dichloro[dimethylgermylene(3,4-bis(trimethylsilyl)-1-cyclopentadienyl)(2,4-dimethyl-4H-5,6,7,8-tetrahydro-1-azulenyl)]hafnium, (140) dichloro[dimethylgermylene(3,4-bis(trimethylsilyl)-1-cyclopentadienyl)(2-ethyl-4-methyl-4H-5,6,7,8-tetrahydro-1-azulenyl)]hafnium, (141) dimethyl[dimethylsilylene(cyclopentadienyl)(2,4-dimethyl-4H-5,6,7,8-tetrahydro-1-azulenyl)]hafnium, (142) dimethyl[dimethylsilylene (2,5-dimethyl-1-cyclopentadienyl)(2,4-dimethyl-4H-5,6,7,8-tetrahydro-1-azulenyl)]hafnium, (143) dimethyl[dimethylsilylene(3,4-dimethyl-1-cyclopentadienyl)(2,4-dimethyl-4H-5,6,7,8-tetrahydro-1-azulenyl)]hafnium, (144) dimethyl [dimethylsilylene(9-fluorenyl)(2,4-dimethyl-4H-5,6,7,8-tetrahydro-1-azulenyl)]hafnium, (145) [dimethylsilylene(cyclopentadienyl)(2,4-dimethyl-4H-5,6,7,8-tetrahydro-1-azulenyl)]hafnium dihydride, (146) [dimethylsilylene (2,5-dimethyl-1-cyclopentadienyl)(2,4-dimethyl-4H-5,6,7,8-tetrahydro-1-azulenyl)]hafnium dihydride, (147) [dimethylsilylene(3,4-dimethyl-1-cyclopentadienyl)(2,4-dimethyl-4H-5,6,7,8-tetrahydro-1-azulenyl)]hafnium dihydride, (148) [dimethylsilylene(9-fluorenyl)(2,4-dimethyl-4H-5,6,7,8-tetrahydro-1-azulenyl)]hafnium dihydride, (149) bis (dimethylamido)[dimethylsilylene(cyclopentadienyl)(2,4-dimethyl-4H-5,6,7,8-tetrahydro-1-azulenyl)]hafnium, (150) bis(dimethylamido)[dimethylsilylene(2,5-dimethyl-1-cyclopentadienyl)(2,4-dimethyl-4H-5,6,7,8-tetrahydro-1-azulenyl)]hafnium, (151) bis(dimethylamido)[dimethylsilylene(3,4-dimethyl-1-cyclopentadienyl)(2,4-dimethyl-4H-5,6,7,8-tetrahydro-1-azulenyl)]hafnium, (152) bis(dimethylamido)[dimethylsilylene(9-fluorenyl)(2,4-dimethyl-4H-5,6,7,8-tetrahydro-1-azulenyl)]hafnium, (153) dichloro[dimethylsilylene(cyclopentadienyl)(2-methyl-4-chloromethyl-4H-5,6,7,8-tetrahydro-1-azulenyl)]hafnium, (154) dichloro[dimethylsilylene(2,5-dimethyl-1-cyclopentadienyl) (2-methyl-4-chloromethyl-4H-5,6,7,8-tetrahydro-1-azulenyl)]hafnium, (155) dichloro[dimethylsilylene(3,4-dimethyl-1-cyclopentadienyl)(2-methyl-4-chloromethyl-4H-5,6,7,8-tetrahydro-1-azulenyl)]hafnium, (156) dichloro[dimethylsilylene(9-fluorenyl)(2-methyl-4-chloromethyl-4H-5,6,7,8-tetrahydro-1-azulenyl)]hafnium.

Preferred of those C1-symmetric metallocenes (1) to (156) for use as a polymerization catalyst component for obtaining the polypropylene segment according to the invention are dichloro[dimethylsilylene(cyclopentadienyl) (2,4-dimethyl-4H-1-azulenyl)]hafnium, dichloro[dimethylsilylene(cyclopentadienyl)(2,4-dimethyl-4H-5,6,7,8-tetrahydro-1-azulenyl)]hafnium, dichloro[dimethylsilylene(cyclopentadienyl)(2-ethyl-4-methyl-4H-1-azulenyl)]hafnium, and dichloro [dimethylsilylene(cyclopentadienyl)(2-ethyl-4-methyl-4H-5,6,7,8-tetrahydro-1-azulenyl)]hafnium. Also preferred are dichloro[dimethylsilylene(9-fluorenyl)(2,4-dimethyl-4H-1-azulenyl)]hafnium, dichloro[dimethylsilylene(cyclopentadienyl) (2-n-propyl-4-methyl-4H-1-azulenyl)]hafnium, dichloro[dimethylsilylene(cyclopentadienyl)(2-isopropyl-4-methyl-4H-1-azulenyl)]hafnium, and dichloro[dimethylgermylene(cyclopentadienyl)(2,4-dimethyl-4H-1-azulenyl)]hafnium.

When one or more C1-symmetric metallocenes are used as a polymerization catalyst component for obtaining the polypropylene segment according to the invention, a combination of two or more thereof may be employed. In this

case, a mixture of two or more metallocenes may be used. Alternatively, use may be made of a method in which one of the transition metal compounds is used to initiate polymerization and another transition metal compound is newly added at the time when the first-stage polymerization has been completed or before the initiation of second-stage polymerization to continue polymerization.

The compounds having the same structures as compounds (1) to (156) enumerated above as examples except that the hafnium as the central atom M has been replaced by titanium or zirconium can also be used likewise as a polymerization catalyst component.

Especially preferred examples of those transition metal compounds for use in producing the PP according to the invention include a transition metal compound having as a ligand a cyclopentadienyl ring which has thereon two or more substituents with a size not smaller than that of methyl. When this transition metal compound is used as a catalyst component, a PP having a terminal unsaturated bond, preferably a vinyl group, can be easily obtained.

· Methods of Synthesizing Transition Metal Compounds

The C1-symmetric transition metal compound according to the invention can be synthesized by any desired known method suitable for the substituents or the mode of bond. A typical synthesis route is as shown by the following reaction schemes. In the reaction schemes, $H_2R^a$ and $H_2R^b$ respectively represent the following structures.

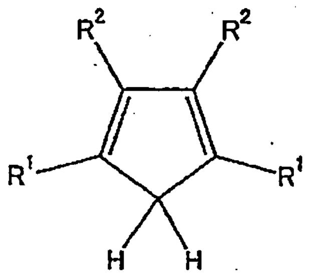

$(H_2R^a)$

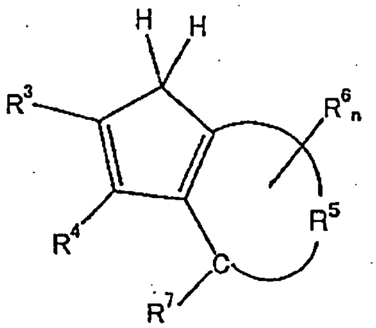

$(H_2R^b)$

($R^1$ to $R^7$ and n have the same meanings as defined in formula (V).)

$H_2R^a + n\text{-}C_4H_9Li \rightarrow HR^aLi + C_4H_{10}$

$H_2R^b + n\text{-}C_4H_9Li \rightarrow HR^bLi + C_4H_{10}$

$HRbLi + QCl_2 \rightarrow Cl\text{-}Q\text{-}HR^b + LiCl$

$HR^aLi + Cl\text{-}Q\text{-}HR^b + LiCl \rightarrow HR^a\text{-}Q\text{-}HR^b + 2LiCl$

(alternatively, reaction with $HR^aNa$, which is a sodium salt of $H_2R^a$, is possible:

$HR^aNa + Cl\text{-}Q\text{-}HR^b + LiCl \rightarrow HR^a\text{-}Q\text{-}HR^b + LiCl + NaCl$)

$HR^a\text{-}Q\text{-}HR^b + 2n\text{-}C_4H_9Li \rightarrow LiR^a\text{-}Q\text{-}LiR^b + 2C_4H_{10}$

$$LiR^a\text{-}Q\text{-}LiR^b + HfCl_4 \rightarrow (R^a\text{-}Q\text{-}R^b)HfCl_2 + 2LiCl$$

A metal salt of a cyclopentadienyl compound, such as the $HR^aLi$ and $HR^bLi$, may be synthesized by a method involving the addition reaction of an aryl group or the like, as described in, e.g., European Patent 697,418. Specifically, an alkyllithium compound is reacted with an azulene compound in an inert solvent to yield the lithium salt of a dihydroazulenyl compound. As the alkyllithium compound is used methyllithium, n-butyllithium, s-butyllithium, or the like. As the inert solvent is used hexane, benzene, toluene, diethyl ether, tetrahydrofuran, a solvent comprising a mixture of these, etc.

Furthermore, a compound of formula (VII) is obtained also by hydrogenating a compound of formula (VI). For the hydrogenation may be used any solvent which itself does not undergo hydrogenation and which does not decompose the compound of formula (VI). For example, a halogenated hydrocarbon such as methylene chloride or 1,2-dichloroethane is preferred.

There are no particular limitations on reaction temperature, reaction pressure, and reaction time. In general, however, optimal conditions can be selected from the following ranges while taking account of productivity and the ability of the process. The reaction temperature is generally 0°C or higher, preferably 10°C or higher, and is generally 70°C or lower, preferably 50°C or lower. The reaction pressure is generally 0.01 MPa or higher, preferably 0.03 MPa or higher, most preferably 0.05 MPa or higher, and is generally 20 MPa or lower, preferably 10 MPa or lower, most preferably 8 MPa or lower. The reaction time is generally 0.1 hour or longer, preferably 0.2 hours or longer, most preferably 0.3 hours or longer, and is generally 30 hours or shorter, preferably 25 hours or shorter, most preferably 20 hours or shorter. As a hydrogenation catalyst can be used platinum, platinum oxide, palladium, ruthenium, rhodium, or a known transition metal catalyst.

· Catalyst for Olefin Polymerization

For obtaining the polypropylene segment according to the invention, it is preferred that one or more substances selected from the group consisting of (1) organic aluminumoxy compounds, (2) ionic compounds capable of reacting with the C1-symmetric metallocene to convert this component into a cation, (3) Lewis acids, and (4) either ion-exchange layered compounds excluding silicates or inorganic silicates be used as a promoter in combination with the C1-symmetric metallocene.

More preferred is an $\alpha$-olefin polymerization catalyst which is characterized by comprising the following components (A) and (B) and optionally containing the following component (C).

Component (A): the C1-symmetric transition metal compound
Component (B): one or more compounds selected from the group consisting of organic aluminumoxy compounds, ionic compounds capable of reacting with component (A) to convert it into a cation, or Lewis acids
Component (C): a finely particulate support

Component (B) and component (C) will be explained below.

Component (B): One or More Compounds Selected from the Group Consisting of Organic Aluminumoxy Compounds, Ionic Compounds Capable of Reacting with Component (A) to Convert It into Cation, or Lewis Acids

(i) Organic Aluminumoxy Compounds

Examples of the organic aluminumoxy compounds include compounds represented by the following formulae (IX), (X), and (XI).

In the formulae, $R^{20}$ represents a hydrogen atom or a hydrocarbon residue, preferably a hydrocarbon residue having 1-10 carbon atoms, especially preferably having 1-6 carbon atoms. The $R^{20}$'s may be the same or different. Symbol p represents an integer of 0-40, preferably 2-30.

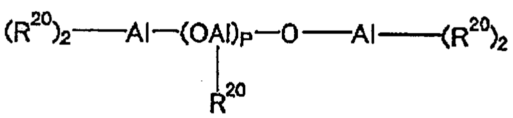

(IX)

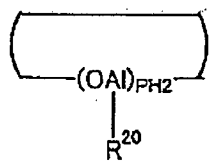

(X)

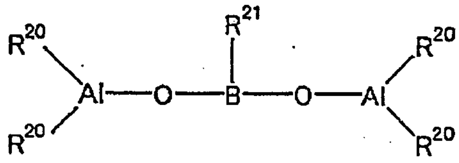

(XI)

The compounds represented by formulae (IX) and (X) are compounds also called aluminoxanes, and are obtained by the reaction of one trialkylaluminum or two or more trialkylaluminums with water. Examples thereof include (a) methylaluminoxane, ethylaluminoxane, propylaluminoxane, butylaluminoxane, and isobutylaluminoxane, which are obtained from one trialkylaluminum and water, and (b) methylethylaluminoxane, methylbutylaluminoxane, and methylisobutylaluminoxane, which are obtained from two trialkylaluminums and water. Preferred of these are methylaluminoxane and methylisobutylaluminoxane. Two or more of these aluminoxanes can be used in combination. Those aluminoxanes can be prepared under various conditions in known manners.

The compounds represented by formula (XI) can be obtained by the reaction of one trialkylaluminum or two trialkylaluminums with an alkylboric acid represented by the following formula (XII) in a ratio of from 10:1 to 1:1 (by mole). In formulae (XI) and (XII), $R^{21}$ represents a hydrocarbon residue or halogenated hydrocarbon group which has 1-10 carbon atoms, preferably 1-6 carbon atoms.

$$R^{21}B(OH)_2 \qquad \text{(XII)}$$

Examples thereof include the following reaction products: (a) a product of the reaction of trimethylaluminum with methylboric acid in a ratio of 2:1, (b) a product of the reaction of triisobutylaluminum with methylboric acid in a ratio of 2:1, (c) a product of the reaction of trimethylaluminum and triisobutylaluminum with methylboric acid in a ratio of 1:1: 1, (d) a product of the reaction of trimethylaluminum with ethylboric acid in a ratio of 2:1, and (e) a product of the reaction of triethylaluminum with butylboric acid in a ratio of 2:1.

(ii) Ionic Compounds Capable of Reacting with Transition Metal Compound to Convert the Component into Cation

Examples thereof include compounds represented by the following formula (XIII).

$$[K]^{e+}[Z]^{e-} \qquad \text{(XIII)}$$

In formula (XIII), K is a cation component. Examples thereof include a carbonium cation, tropylium cation, ammonium cation, oxonium cation, sulfonium cation, and phosphonium cation. Examples thereof further include metal cations and organometal cations which themselves are readily reduced.

Specific examples of those cations include triphenylcarbonium, diphenylcarbonium, cycloheptatrienium, indenium, triethylammonium, tripropylammonium, tributylammonium, N,N-dimethylanilinium, dipropylammonium, dicyclohexylammonium, triphenylphosphonium, trimethylphosphonium, tris(dimethylphenyl)phosphonium, tris(dimethylphenyl)phosphonium, tris(methylphenyl)phosphonium, triphenylsulfonium, triphenylsulfonium, triphenyloxonium, triethyloxonium, pyrylium, silver ion, gold ion, platinum ion, copper ion, palladium ion, mercury ion, and ferrocenium ion.

In formula (XIII), Z is an anion component, which is an component (in general, a non-coordinating component) serving as a counter anion for the cation species formed by the conversion of the transition metal compound. Examples of Z include organoboron compound anions, organoaluminum compound anions, organogallium compound anions, organoarsenic compound anions, and organoantimony compound anions. Specific examples of such compounds include the following: (a) tetraphenylboron, tetrakis(3,4,5-trifluorophenyl)boron, tetrakis{3,5-bis(trifluoromethyl)phenyl}boron,

tetrakis{3,5-di(t-butyl)phenyl}boron, tetrakis(pentafluorophenyl)boron, and the like, (b) tetraphenylaluminum, tetrakis (3,4,5-trifluorophenyl)aluminum, tetrakis{3,5-bis(trifluoromethyl)phenyl}aluminum, tetrakis{3,5-di(t-butyl)phenyl}aluminum, tetrakis(pentafluorophenyl)aluminum, and the like, (c) tetraphenylgallium, tetrakis(3,4,5-trifluorophenyl)gallium, tetrakis{3,5-bis(trifluoromethyl)phenyl}gallium, tetrakis{3,5-di(t-butyl)phenyl}gallium, tetrakis(pentafluorophenyl)gallium, and the like, (d) tetraphenylphosphorus, tetrakis(pentafluorophenyl)phosphorus, and the like, (e) tetraphenylarsenic, tetrakis(pentafluorophenyl)arsenic, and the like, (f) tetraphenylantimony, tetrakis(pentafluorophenyl)antimony, and the like, and (g) decaborate, undecaborate, carbadodecaborate, decachlorodecaborate, and the like.

(3) Lewis Acids

Examples of the Lewis acids capable of converting especially the transition metal compound into a cation include various organoboron compounds, metal halide compounds, and solid acids. Specific examples thereof include the following compounds: (a) organoboron compounds such as triphenylboron, tris(3,5-difluorophenyl)boron, and tris (pentafluorophenyl)boron, (b) metal halide compounds such as aluminum chloride, aluminum bromide, aluminum iodide, magnesium chloride, magnesium bromide, magnesium iodide, magnesium chloride bromide, magnesium chloride iodide, magnesium bromide iodide, magnesium chloride hydride, magnesium chloride hydroxide, magnesium bromide hydroxide, magnesium chloride alkoxides, and magnesium bromide alkoxides, and (c) solid acids such as alumina and silica-alumina.

Component (C): Finely Particulate Support

A finely particulate support may be caused to coexist as an optional component. The finely particulate support is a support which is made of an inorganic or organic compound and is in a finely particulate form having a diameter which is generally 5 μm or larger, preferably 10 μm or larger, and is generally 5 mm or smaller, preferably 2 mm or smaller.

Examples of the inorganic support include oxides such as $SiO_2$, $Al_2O_3$, MgO, ZrO, $TiO_2$, $B_2O_3$, and ZnO and composite metal oxides such as $SiO_2$-MgO, $SiO_2$-$Al_2O_3$, $SiO_2$-$TiO_2$, $SiO_2$-$Cr_2O_3$, and $SiO_2$-$Al_2O_3$-MgO.

Examples of the organic support include finely particulate porous-polymer supports made of a (co)polymer of an α-olefin having 2-14 carbon atoms, such as ethylene, propylene, 1-butene, or 4-methyl-1-pentene, or a (co)polymer of an aromatic unsaturated hydrocarbon such as styrene or divinylbenzene. The specific surface areas of these supports are generally 20 $m^3/g$ or larger, preferably 50 $m^3/g$ or larger, and are generally 1,000 $m^3/g$ or smaller, preferably 700 $m^3/g$ or smaller. The pore volumes thereof are generally 0.1 $cm^2/g$ or larger, preferably 0.3 $cm^2/g$ or larger, more preferably 0.8 $cm^2/g$ or larger.

It is also preferred to use an α-olefin polymerization catalyst characterized by comprising the following components (A) and (D) and optionally containing the following component (E).

Component (A): the CI-symmetric transition metal compound
Component (D): a compound selected from the group consisting of ion-exchange layered compounds excluding silicates or of inorganic silicates
Component (E): an organoaluminum compound

Component (D) and component (E) will be explained below.

Component (D): Compound Selected from the Group Consisting of Ion-Exchange Layered Compounds Excluding Silicates or of Inorganic Silicates

The ion-exchange layered compounds excluding silicates are compounds which have a crystal structure wherein the constituent sheets have been stacked up parallel to each other by means of a weak bonding force by, e.g., ionic bonds, and in which the ions contained are exchangeable.

Examples of the ion-exchange layered compounds excluding silicates include ionically crystalline compounds having a layered crystal structure of the hexagonal closest packing form, antimony form, $CdCl_2$ form, $CdI_2$ form, or the like. Specific examples thereof include crystalline acid salts of polyvalent metals, such as α-Zr($HAsO_4$) • $H_2O$, α-Zr ($HPO_4$)$_2$, α-Zr($KPO_4$) • 3$H_2O$, α-Ti($HPO_4$)$_2$, α-Ti($HAsO_4$)$_2$ • $H_2O$,α-Sn($HPO_4$)$_2$ • $H_2O$, γ-Zr($HPO_4$)$_2$, γ-Ti($HPO_4$)$_2$, and γ-Ti($NH_4PO_4$)$_2$ • $H_2O$.

Examples of the inorganic silicates include clays, clay minerals, zeolites, and diatomaceous earth. These may be synthetic products or may be minerals occurring naturally.

Examples of the clays and clay minerals include allophane-group minerals such as allophane, kaolin-group minerals such as dickite, nacrite, kaolinite, and anorkisite, halloysite-group minerals such as metahalloysite and halloysite, serpentine-group minerals such as chrysotile, lizardite, and antigorite, smectites such as montmorillonite, sauconite,

beidellite, nontronite, saponite, and hectorite, vermiculite minerals such as vermiculite, mica minerals such as illite, sericite, and glauconite, attapulgite, sepiolite, palygorskite, bentonite, kibushi clay, gairome clay, hisingerite, pyrophyllite, and chlorite-group minerals.

Examples of the artificial products include synthetic micas, synthetic hectorite, synthetic saponite, and synthetic taeniolite.

Preferred ones of those examples include kaolin-group minerals such as dickite, nacrite, kaolinite, and anorkisite, halloysite-group minerals such as metahalloysite and halloysite, serpentine-group minerals such as chrysotile, lizardite, and antigorite, smectites such as montmorillonite, sauconite, beidellite, nontronite, saponite, and hectorite, vermiculite minerals such as vermiculite, mica minerals such as illite, sericite, and glauconite, synthetic micas, synthetic hectorite, synthetic saponite, and synthetic taeniolite. Especially preferred ones include smectites such as montmorillonite, sauconite, beidellite, nontronite, saponite, and hectorite, vermiculite minerals such as vermiculite, synthetic micas, synthetic hectorite, synthetic saponite, and synthetic taeniolite.

Those ion-exchange layered compounds excluding silicates or those inorganic silicates may be used as they are. It is, however, preferred to subject those compounds to a treatment with an acid such as hydrochloric acid, nitric acid, sulfuric acid, or the like and/or a treatment with a salt such as LiCl, NaCl, KCl, $CaCl_2$, $MgCl_2$, $Li_2SO_4$, $MgSO_4$, $ZnSO_4$, $Ti(SO_4)_2$, $Zr(SO_4)_2$, $Al_2(SO_4)_3$, or the like. For conducting such a treatment, use may be made of a method in which the corresponding acid and base are mixed together to yield the salt in the reaction system before the treatment. It is also possible to conduct a shape-regulating operation such as pulverization, granulation, etc. For obtaining a solid catalyst component having excellent particle flowability, it is preferred to conduct granulation. In general, the components described above are dehydrated/dried before being used. From the standpoint of catalyst performances such as polymerization activity, it is preferred to use component (4), i.e., an ion-exchange layered compound other than silicates or an inorganic silicate, among those promoter components.

Component (E): Organoaluminum Compound

This compound is an optional promoter component in the polymerization catalyst described above. This organoaluminum compound is a compound represented by $AlR^{22}_mZ_{3-m}$ (wherein $R^{22}$ is a hydrocarbon group having 1-20 carbon atoms; Z is hydrogen, a halogen, an alkoxy group, or an aryloxy group; and m is a number satisfying $0<m\leq3$).

Examples thereof include trialkylaluminums such as trimethylaluminum, triethylaluminum, tripropylaluminum, and triisobutylaluminum, halogen- or alkoxy-containing alkylaluminums such as diethylaluminum monochloride and diethylaluminum ethoxide, or hydrogen-containing organoaluminum compounds such as diethylaluminum hydride and diisobutylaluminum hydride. Also usable besides these are aluminoxanes such as methylaluminoxane. Especially preferred of these are trialkylaluminums. Those optional components may be used in combination of two or more thereof. Furthermore, the optional components may be newly added after the initiation of polymerization.

Process for Producing Olefin Polymerization Catalyst

Although a catalyst for obtaining the polypropylene segment in the propylene block copolymer of the invention is obtained through contact among the components described above, there are no particular limitations on methods for the contact. Besides being conducted during catalyst preparation, this contact may be performed during the preliminary polymerization or polymerization of propylene.

It is also possible to use a method in which during or after contact among catalyst components, solids such as a polypropylene polymer and an inorganic oxide, e.g., silica or alumina, are caused to coexist or contacted therewith.

The contact may be conducted in an inert gas such as nitrogen or in an inert hydrocarbon solvent such as pentane, hexane, heptane, toluene, or xylene. It is preferred that such solvents to be used should be ones which have undergone a treatment for removing poison substances such as water and sulfur compounds. The contact is preferably conducted at a temperature in the range of from -20°C to the boiling point of the solvent used, especially in the range of from room temperature to the boiling point of the solvent used.

There are no particular limitations on the proportions of the catalyst components to be used. However, in the case where an ion-exchange layered compound other than silicates or an inorganic silicate is used as a promoter component, the amounts of the transition metal compound and the organoaluminum compound as an optional component can be regulated to 0.0001-10 mmol, preferably 0.001-5 mmol, and to 0-10,000 mmol, preferably 0.01-100 mmol, respectively, per g of the promoter component. This regulation brings about satisfactory results concerning polymerization activity, etc. Furthermore, it is preferred also from the standpoints of polymerization activity, etc. that the atomic ratio of the transition metal in the transition metal compound to the aluminum in the organoaluminum compound as an optional component should be regulated so as to be 1:(0-1,000,000), preferably 1:(0.1-100,000).

The catalyst thus obtained may be washed with an inert hydrocarbon solvent, such as n-pentane, n-hexane, n-heptane, toluene, or xylene, before use or may be used without being washed.

During the washing, the organoaluminum compound described above may be newly used in combination with the catalyst according to need. The amount of the organoaluminum compound to be used here is preferably regulated to 1:(0-10,000) in terms of the atomic ratio of the aluminum in the organoaluminum compound to the transition metal in the transition metal compound.
A prepolymer obtained by preliminarily polymerizing an $\alpha$-olefin having a low molecular weight, such as ethylene or propylene, and washing the polymer according to need may be used as a catalyst. This preliminary polymerization may be conducted in an inert gas such as nitrogen or in an inert hydrocarbon solvent such as n-pentane, n-hexane, n-heptane, toluene, or xylene.

· Starting Reactant Materials

As starting components other than propylene, use can be made of compounds containing one or more carbon-carbon unsaturated bonds, such as $\alpha$-olefins, conjugated and unconjugated dienes, and cycloolefins. As the $\alpha$-olefins may be used $\alpha$-olefins having generally 2-20, preferably 2-10 carbon atoms. Examples thereof include ethylene, 1-butene, 4-methyl-1-pentene, 1-hexene, 1-octene, 1-decene, 1-dodecene, 1-tetradecene, 1-hexadecene, 1-octadecene, and 1-eicosene. Preferred examples of these include ethylene and 1-butene.
Examples of the conjugated and unconjugated dienes include butadiene, 1,4-hexadiene, 1,5-hexadiene, 7-methyl-1,6-octadiene, 1,8-nonadiene, and 1,9-decadiene.
Examples of the cycloolefins include olefins such as cyclopropene, cyclobutene, cyclopentene, norbornene, and dicyclopentadiene.

· Methods of Reaction

In polymerizing starting reactant materials, the so-called multistage polymerization in which conditions are changed by stages can be conducted. For example, the so-called block copolymerization is possible in which propylene is polymerized in the first stage and the copolymerization of ethylene and propylene is conducted in the second stage.
Although the reaction may be conducted using a solvent or without using a solvent, it is preferred to use a solvent. Examples of the solvent include hydrocarbons such as n-pentane, n-hexane, n-heptane, n-octane, n-decane, benzene, toluene, xylene, cyclohexane, methylcyclohexane, and dimethylcyclohexane, halogenated hydrocarbons such as chloroform, methylene chloride, carbon tetrachloride, tetrachloroethane, chlorobenzene, and o-dichlorobenzene, and polar solvents such as n-butyl acetate, methyl isobutyl ketone, tetrahydrofuran, cyclohexanone, and dimethyl sulfoxide. Preferred of these are hydrocarbons. Especially preferred are aromatic hydrocarbons. A mixture of compounds shown above may be used as a solvent.

· Reaction Conditions

Modes of reaction are not particularly limited. However, solution polymerization and bulk polymerization are preferred.
The concentration of the catalyst is not particularly limited. However, in the case where the mode of reaction is solution polymerization, the catalyst amount per L of the liquid reaction mixture is generally 100 g or smaller, preferably 50 g or smaller, most preferably 25 g or smaller, and is generally 0.01 mg or larger, preferably 0.05 mg or larger, most preferably 0.1 mg or larger.
There are no particular limitations on polymerization temperature, polymerization pressure, and polymerization time. In general, however, optimal conditions can be selected from the following ranges while taking account of productivity and the ability of the process. Namely, the polymerization temperature is generally -20°C or higher, preferably 0°C or higher, and is generally 150°C or lower, preferably 100°C or lower. The polymerization pressure is generally 0.01 MPa or higher, preferably 0.05 MPa or higher, most preferably 0.1 MPa or higher, and is generally 100 MPa or lower, preferably 20 MPa or lower, most preferably 5 MPa or lower. The polymerization time is generally 0.1 hour or longer, preferably 0.2 hours or longer, most preferably 0.3 hours or longer, and is generally 30 hours or shorter, preferably 25 hours or shorter, more preferably 20 hours or shorter, most preferably 15 hours or shorter.
By using the catalyst for olefin polymerization according to the invention, an olefin polymer having solubility and adhesiveness can be obtained. For attaining this, however, the reaction should be conducted so that the olefin polymer satisfies the following requirements (1) and (2) .

(1) The molecular weight thereof is generally 2,000 or higher, preferably 5,000 or higher, more preferably 10,000 or higher, most preferably 30,000 or higher, and is generally 400,000 or lower, preferably 300,000 or lower, most preferably 250,000 or lower.
(2) When the polymer is analyzed by $^{13}C$-NMR spectroscopy to examine peaks attributable to the methyl carbon

atoms of the propylene unit chain part formed by head-to-tail bonding and the proportion of the area $S_1$ of the peak whose top is located at 21.8 ppm to the total area S of the peaks appearing in the range of from 19.8 ppm to 22.2 ppm is determined, with the chemical shift of the top of the peak attributable to the pentads represented by mmmm being regarded as at 21.8 ppm, then that proportion is from 10% to 60%.
It is also preferred to conduct the reaction so that the olefin polymer further satisfies the following requirement (3).
(3) The polymer has regio irregular units present in the main chain which are derived from 2,1-inserted propylene monomer and/or 1,3-inserted propylene monomer, and the total proportion of the regio irregular units formed by 2,1-insertion and 1,3-insertion to all propylene insertion is 0.05% or higher.

For yielding an olefin polymer which satisfies those requirements, use can be made of known methods employed in polymerization with known metallocene catalysts. Namely, examples of methods for molecular-weight regulation include a method in which the polymerization temperature is controlled to regulate molecular weight, a method in which the monomer concentration is controlled to regulate molecular weight, and a method in which a chain transfer agent is used to regulate molecular weight. In the case of using a chain transfer agent, hydrogen is preferred. For pentad regulation, this may be attained by regulating the reaction temperature, starting material concentration, etc.
For obtaining a PP having an unsaturated bond at an end, this may be attained by regulating the structure of the catalyst and reaction conditions. Namely, the catalyst described hereinabove may be used, or the polymerization of propylene may be conducted under hydrogen-free conditions or low-hydrogen conditions with a hydrogen concentration of 5% by mole or lower. The term hydrogen concentration herein means the concentration of hydrogen in the gas-phase part of the reactor in propylene polymerization. Higher polymerization temperatures are preferred in this case. Specifically, the polymerization temperature is generally 40°C or higher, preferably 50°C or higher, more preferably 60°C or higher, and is generally 150°C or lower.
One of both ends of the polypropylene thus obtained is a saturated-bond end, whereas the other end is either an unsaturated-bond end or a saturated-bond end. Consequently, the proportion of such unsaturated bonds to all ends is 50% at the most. Since the parts which can be modified by the following method are unsaturated bonds, the proportion of unsaturated bonds preferably is a value close to the maximum. The proportion thereof in all ends is at least 5% or higher, more preferably 10% or higher, even more preferably 20% or higher.

[2]-A-(ii) Terminal Modification of Polypropylene

Of the polypropylene obtained by the method described above, the components in which one end is an unsaturated-bond end are reacted with a compound containing a Group 13 element to convert the unsaturated-bond end to an end having the Group 13 element bonded thereto.
The compound containing a Group 13 element for use in the reaction preferably is an organoaluminum compound or an organoboron compound. It preferably is a trialkylaluminum, a dialkylaluminum hydride, or a boron compound having one or more hydrogen-boron bonds, and especially preferably is a boron compound having one or more hydrogen-boron bonds. Most preferred examples of this compound include 9-borabicyclo[3.3.1]nonane. This 9-borabicyclo [3.3.1]nonane may be either a monomer or a dimer.
The reaction between the polypropylene whose one end is an unsaturated-bond end and the compound containing a Group 13 element is conducted, for example, in the following manners.

(i) The polypropylene having a terminal unsaturated bond is mixed with a solution of diisobutylaluminum hydride and this mixture is refluxed for 0.5-6 hours.
(ii) The polypropylene having a terminal unsaturated bond is mixed with 9-borabicyclo[3.3.1]nonane in tetrahydrofuran and this mixture is stirred at 20-65°C for 0.5-24 hours.

Thus, a polypropylene serving as the PP part of the propylene block copolymer is produced. The polypropylene obtained includes components which have a Group 13 element bonded to one end thereof. This Group 13 element preferably is boron.

[2]-A-(iii) Polymerization for Forming Polar-Group-Containing Polymer Segment

Subsequently, the polar-group-containing polymerizable monomer described above is used to conduct polymerization reaction in the presence of the polypropylene having a Group 13 element bonded to one end thereof to thereby produce a propylene block copolymer. Alternatively, a polymerizable monomer containing a polar-group derivative is used to conduct polymerization reaction and the polar-group derivative is then converted to a polar group. Thus, the propylene block copolymer of the invention can be produced.
The term "polymerizable monomer containing a polar-group derivative" means a polymerizable monomer which

has a group capable of imparting a polar group through some reaction. For example, a vinyl group can impart a hydroxyl group through a reaction involving hydroboration and, hence, a polymerizable monomer containing a vinyl group is a polymerizable monomer containing a polar-group derivative in the invention. Furthermore, a methyl group on a benzene ring also can impart a functional group through a radical reaction or with the aid of an organometallic reagent. Consequently, a polymerizable monomer containing a toluyl group also is a polymerizable monomer containing a polar-group derivative in the invention. Examples of the polymerizable monomer containing a polar-group derivative include dienes such as 1,3-butadiene, 1,4-pentadiene, and 1,5-hexadiene and styrene derivatives such as divinylbenzene and p-methylstyrene.

Through this polymerization reaction, the part "a" is formed between the Group 13 element bonded to an end and the polypropylene segment. The polymer produced by this polymerization reaction is the polar-group-containing polymer segment (part R). There are cases where part of the structure formed by the polymerization reaction is included in the part "a".

That polymerization reaction preferably is a radical polymerization reaction.

A method in which a radical-polymerizable monomer containing a polar group will be explained below as an example.

Namely, in the presence of a radical-polymerizable monomer containing a polar group, the carbon-Group 13 element bonding part of the polypropylene having a Group 13 element bonded to one end thereof is oxidized with molecular oxygen to thereby generate a radical and conduct radical polymerization reaction.

When the polypropylene having boron bonded to one end thereof is oxidized with molecular oxygen in the presence of a radical-polymerizable monomer containing a polar group, then the terminal carbon-boron bonding part is oxidized by molecular oxygen and thus converted to a peroxyborane (-O-O-B).

On the other hand, when the polypropylene having aluminum bonded to one end thereof is oxidized with molecular oxygen in the presence of a radical-polymerizable monomer containing a polar group, then the terminal carbon-aluminum bonding part is oxidized by molecular oxygen and thus converted to an aluminum oxide (-O-Al).

The peroxyborane or the aluminum oxide generates a radical upon stirring in the presence of the radical-polymerizable monomer containing a polar group, and the alkoxy radical generated functions as an initiator, whereby the radical polymerization of the radical-polymerizable monomer containing a polar group proceeds. In this reaction, one radical-polymerizable monomer containing a polar group may be used alone or two or more such monomers may be used in combination.

The reaction temperature in the radical polymerization reaction is generally 0°C or higher, preferably 5°C or higher, and is generally 200°C or lower, preferably 180°C or lower. Although the reaction time is not particularly limited, it is generally 30 minutes, preferably 1 hour or longer and is generally 12 hours or shorter, preferably 6 hours or shorter. The reaction pressure is generally 0.1 MPa or higher, preferably 0.3 MPa or higher, and is generally 30 MPa or lower, preferably 20 MPa or lower.

The radical polymerization can be terminated by allowing the radical-polymerizable monomer to be wholly consumed or by precipitating a polymer in methanol. By the method described above, a propylene block copolymer in which the part "a" is an ether bond or ester bond and the part R is a polymer formed by radical polymerization can be produced.

[2]-B Processes via PP-X

Examples of processes for producing the propylene block copolymer of the invention include processes in which the target copolymer is produced via PP-X represented by the following formula.

[2]-B-(i) PP-X and Process for Producing it

PP-X (II)

(In formula II, PP represents a polypropylene segment in which the proportion of pentads represented by mmmm to all pentads is 10-60%; and X represents a reactive group or a substituent containing a reactive group.)

The compound represented by formula (II) is an important intermediate for obtaining the propylene block copolymer of the invention.

The part PP in formula (II) can be produced by the method described above under [2]-A.

The reactive group is not particularly limited as long as it is a functional group serving as a site for polymerization initiation, a functional group capable of bonding to a monomer capable of polymerization initiation, or a functional group capable of reacting with a polar-group-containing polymer to form a bond therewith. However, preferred examples thereof

include groups containing active hydrogen and further include halogens.

Examples of the groups containing active hydrogen include a hydroxyl group, amino group, methylamino group, ethylamino group, phenylamino group, aldehyde group, mercapto group, carboxyl group, and amide group. The group preferably is hydroxyl, amino, or mercapto. Examples of groups containing no active hydrogen include an ester group, ether group, thioether group, halogen, thioester group, and ketone group.

The substituent containing a reactive group is a substituent containing any of those functional groups. Examples thereof include functional-group-containing alkyl groups, functional-group-containing aryl groups, functional-group-containing alkoxy groups, and functional-group-containing aryloxy groups in each of which the number of carbon atoms is 1 or more, preferably 2 or more, and is 40 or less, preferably 30 or less. Preferred are functional-group-containing aryl groups. Preferred of the functional-group-containing aryl groups are ones having in the para position a substituent containing oxygen, nitrogen, or sulfur, especially ones having a hydroxyl group, an amino group, and/or a mercapto group in the para position. Examples of such substituents include 2-hydroxyethylphenyl, 4-hydroxybutylphenyl, 2-aminoethylphenyl, 4-aminobutylphenyl, 2-(methylaminoethyl)phenyl, 4-(methylaminobutyl)phenyl, 2-mercaptoethylphenyl, and 4-mercaptobutylphenyl.

The presence of a functional group at an end of the PP-X according to the invention, i.e., in the propylene polymer having a functional group at an end, can be judged from an examination by $^1$H-NMR. Namely, the chemical shift for the protons of the terminal methylene group of the propylene polymer changes upon the bonding of the functional group to the methylene group and becomes distinguishable from the chemical shift for the protons of the methylene groups in the propylene polymer not containing the functional group. Thus, the presence of the functional group is indicated. Furthermore, the absence of a graft functional group in the main chain can be judged in the following manner. When the amount of the functional group in the propylene polymer based on all monomer units is expressed as x (% by mole) and the number-average degree of polymerization of the propylene polymer is expressed as N, then the relationship $x>100/N$ holds in the case where the functional group has been bonded not only at an end but also in the main chain through grafting. Consequently, when the relationship $x \leq 100/N$ holds, this means that no grafted functional group is present in the main chain. Incidentally, the number-average degree of polymerization N is defined with the number-average molecular weight Mn determined by GPC analysis and the molecular weight M of the monomer as $N=Mn/M$.

Furthermore, that a functional group is present only at an end can be judged from a reaction mechanism. For example, in the case where a propylene polymer having a carbon-carbon unsaturated bond at an end is used as a starting material, the presence of such a functional group at an end of this polymer before reaction can be judged by a known technique through $^{13}$C-NMR spectroscopy. Such a terminal unsaturated bond can be utilized to incorporate a hydroxyl group through hydroboration and oxidation or to incorporate a maleic anhydride group by ene reaction. Since these reactions are known to occur on the carbon-carbon unsaturated bond in organic chemistry, the hydroxyl group or maleic anhydride group is regarded as present at an end of the propylene polymer.

In T.C. Chung et al., *Macromol.,* 35, 9352 (2002) is shown a process for producing an isotactic PP having a functional group at an end which comprises polymerizing propylene using both styrene having a functional group and hydrogen as a chain transfer agent. It can be seen from the polymerization mechanism and an NMR spectrum of the product that a functional group is incorporated at an end of the propylene polymer in this process also. Consequently, the propylene polymer having a functional group at an end according to the invention can be produced by using both styrene having a functional group and hydrogen as a chain transfer agent as shown in that document while regulating stereoregularity in propylene polymerization by using the metallocene catalyst explained hereinabove.

(Terminal Hydroxyl Group)

For obtaining a propylene polymer having a hydroxyl group at an end, the following method can, for example, be used. A sodium hydroxide solution and a hydrogen peroxide solution are added to a polypropylene having a Group 13 element bonded to an end thereof, and this mixture is reacted at 0-50°C for 3-7 hours to convert the Group 13 element to a hydroxyl group. The Group 13 element preferably is boron or aluminum.

(Terminal Amino Group)

For obtaining a propylene polymer having an amino group at an end, the following method can, for example, be used. Namely, a metallocene catalyst is used to polymerize propylene optionally together with an $\alpha$-olefin other than propylene in the presence of $CH_2=CH-C_6H_4-(CH_2CH_2N(SiMe_3)_2)$ (wherein $C_6H_4$ represents phenylene) and hydrogen as a chain transfer agent. The polymer obtained is hydrolyzed to thereby obtain a propylene polymer having an amino group at an end.

(Other Substituent)

The method of introducing a terminal amino group can be used also for introducing another substituent at an end. For example, a propylene polymer having chlorine at an end is obtained by using a metallocene catalyst to polymerize propylene optionally together with an α-olefin other than propylene in the presence of p-chlorobenzene and hydrogen as a chain transfer agent.

[2]-B-(ii) Processes for Producing Block Copolymer via PP-X

The block copolymer of the invention can be produced by the various methods shown below from PP-X according to the invention as an intermediate.

(Radical Polymerization)

In the case where the terminal substituent is a hydroxyl group, a radical-polymerization active species for conducting radical polymerization can be generated by reacting 2-bromopropionyl chloride with the propylene polymer having a substituent at an end and represented by formula (II) to thereby convert the hydroxyl group to a bromine group-containing ester.

Although this reaction can be conducted in the presence or absence of a solvent, it is preferred to conduct the reaction in the presence of a solvent. The reaction may be performed batchwise or continuously. It is especially preferred to conduct the reaction batchwise. There are no particular limitations on reaction conditions. However, the reaction temperature may be from -20°C to 200°C, preferably 0°C-100°C, and the reaction time may be from 0.1 hour to 100 hours, preferably from 1 hour to 50 hours. The pressure may be from normal pressure to 10 MPa, preferably from normal pressure to 5 MPa. Although the 2-bromopropionyl chloride in the reaction is used preferably in an amount equimolar with the functional groups of the substituent-terminated propylene polymer to be subjected to the reaction, it may be used in excess. Methods for isolating a reaction product, i.e., a propylene polymer having a bromine group-containing ester at an end, are not particularly limited. However, it is preferred from the standpoint of purity to use a method in which the polymer is separated/purified by reprecipitation from a toluene solution of the polymer with a polar solvent such as an alcohol or a ketone.

The bromine group-containing ester thus obtained is used as an active species to polymerize the radical-polymerizable monomer by radical polymerization. This radical polymerization reaction is conducted in the same manner as the method described under [2]-A.

In another method, butyllithium is reacted with the propylene polymer having a substituent at an end and represented by formula (II) and diethylaluminum chloride is then reacted with the resultant polymer to convert the hydroxyl group to an aluminum oxide. Thus, an active species can be generated.

The aluminum oxide obtained by the method described above is used as an active species to polymerize the radical-polymerizable monomer by radical polymerization. This radical polymerization reaction is conducted in the same manner as the method described under [2]-A.

Furthermore, another metal alkoxide, a metal halide, or a metallic amine may be bonded, in place of an aluminum oxide, to one end of the polypropylene so as to serve as an active species for radical polymerization reaction.. Active species other than an aluminum oxide are generated using a hydroxyl group, amino group, aldehyde group, or halogen bonded to one end of the polypropylene. Preferred of these species for use as an active species is an aluminum oxide.

By the method described above, a propylene block copolymer in which the part "a" is an ether bond, ester bond, or amide bond and the part R is a polymer formed by ring-opening polymerization can be produced.

(Anionic Polymerization)

An anionic polymerization reaction can be conducted by converting the propylene polymer having a functional group at an end and represented by formula (II) into a polypropylene having, for example, a lithium-, potassium-, sodium-, or phosphorus-containing group or the like at the end and then polymerizing an anionically polymerizable monomer therewith.

Examples of the anionically polymerizable monomer include styrene compounds such as, e.g., styrene and α-methylstyrene, acrylic esters such as, e.g., methyl acrylate and ethyl acrylate, methacrylic esters such as, e.g., methyl methacrylate and ethyl methacrylate, acrylonitrile, methacrylonitrile, ethyl methylenemalonate, ethyl α-cyanoacrylate, nitroethylene, and vinylidene cyanide. These monomers may be used alone or as a mixture of two or more thereof.

There are no particular limitations on conditions for the anionic polymerization reaction. In general, however, the reaction is conducted under the following conditions: reaction temperature = -80°C to 150°C, preferably -40°C to 100°C; pressure = 0-10 MPa, preferably 0-3 MPa; time = 1 minute to 100 hours, preferably 10 minutes to 30 hours.

Methods for polymerization termination also are not particularly limited. The polymerization can be terminated by adding an acid or water to thereby quench the anion at the chain end growing in the anionic polymerization.

(Ring-Opening Polymerization)

Ring-opening polymerization can be conducted by converting the propylene polymer having a functional group at an end and represented by formula (II) into a chemical species capable of ring-opening polymerization and then polymerizing a monomer polymerizable by ring-opening polymerization.

The monomer polymerizable by ring-opening polymerization is a cyclic monomer containing as a functional group an olefin, ether, sulfide, amine, disulfide, formal, lactone, lactam, carbonate, urea, urethane, acid anhydride, or the like. The monomer generally is a 3- to 9-membered ring compound. Preferred examples of the monomer polymerizable by ring-opening polymerization include β-propiolactone, β-butyrolactone, δ-valerolactone, glycolide, lactides, ε-caprolactone, α-pyrrolidone, γ-butyrolactam, ε-caprolactam, ethylene oxide, propylene oxide, epichlorohydrin, oxetane, tetrahydrofuran, and-octamethylcyclotetrasiloxane.

(Cationic Polymerization)

Cationic polymerization can be conducted by converting the propylene polymer having a functional group at an end and represented by formula (II) into a chemical species capable of cationic polymerization by causing an acid, specifically a proton acid or a Lewis acid, to act on the terminal functional group of the polymer. Examples of the proton acid include $HClO_4$, $H_2SO_4$, $H_3PO_4$, $Cl_3COOH$, and $CF_3SO_3H$. Examples of the Lewis acid include $BF_3$, $AlBr_3$, $AlCl_3$, $SbCl_5$, $FeCl_3$, $SnCl_4$, $TiCl_4$, $HgCl_2$, and $ZnCl_2$. Other usable compounds include $I_2$. Examples of monomers polymerizable by cationic polymerization include alkylene type monomers such as indene and coumarone, vinyl ethers, and N-vinylcarbazole.

(Method Based on Coupling Reaction)

The coupling reaction of the propylene polymer having a functional group at an end and represented by formula (II) can be conducted by reacting with the terminal functional group a polar polymer having a functional group capable of reacting with that functional group to form a bond.

Examples of methods for the coupling reaction include: a method in which a PP represented by PP-X (II) wherein X is a terminal hydroxyl group or terminal amino group is reacted with a polyurethane, polyester, or polyamide; and a method in which the PP is reacted with a polyethylene glycol having an ester group at an end.

Of the methods described above, the method based on radical polymerization or the method based on coupling reaction is preferred because the structure of the polar polymer segment can be precisely regulated in these two methods.

(Reaction Products)

The processes described above give a mixture of polypropylene and the propylene block copolymer of the invention. In general, the proportion of the polypropylene having an unsaturated bond at one end and obtained by the polymerization for polypropylene segment formation becomes the propylene block copolymer of the invention. In the case where the propylene block copolymer of the invention only is desired to be obtained from the mixture, the proportion can be changed, for example, by extracting the propylene block copolymer of the invention.

In using the propylene block copolymer of the invention, there are no particular limitations on the proportions of PP and PP-a-R. Any desired proportions can be selected according to purposes. For example, when relatively high oleophilicity is desired, the proportion of PP is increased. When relatively high hydrophilicity is desired, the proportion of PP-a-R is increased. It should, however, be noted that too high proportions of PP result in the coating of PP-a-R with PP and the block copolymer comes to be less apt to perform its functions. Consequently, the proportion of PP-a-R to PP is generally regulated so that PP-a-R/PP$\geq$0.05.

[3] Properties

As stated above, the propylene block copolymer of the invention has both oleophilicity and hydrophilicity. Examples of the oleophilicity include affinity for polyolefins and affinity for hydrocarbon solvents. Examples of the hydrophilicity include affinity for polar polymers, affinity for metals, and affinity for polar solvents. By regulating a balance between the oleophilicity and the hydrophilicity, properties of the block copolymer of the invention can be regulated. For example, by regulating a balance between the two natures, solubility in hydrocarbon solvents such as toluene can be reconciled with an affinity for polar substances.

[4] Applications

The propylene block copolymer of the invention has both oleophilicity and hydrophilicity as stated above. Because of this, the copolymer can be used in applications such as antifogging agents, binder resins for coating materials, primers, adhesives, pigment dispersants, and compatibilizing agents so as to take advantage of such properties.

In particular, when the propylene block copolymer according to the invention is applied to an olefin polymer as a substrate, the coating film formed shows satisfactory adhesion to the substrate. Consequently, this propylene block copolymer can be used as an adhesive resin for application to olefin polymers.

Incidentally, for obtaining satisfactory adhesion, it is preferred to conduct heating after application. Although the heating temperature is not particularly limited, it is preferably 50-150°C, more preferably 60-130°C, from the standpoint of suitability for practical use. Methods for application also are not particularly limited, and use may be made of known methods such as application by spraying, application with a roller, and application with a brush.

In the case where the copolymer according to the invention is applied to an olefin polymer, examples of the olefin polymer for use as a substrate include olefin polymers such as high-pressure-process polyethylene, medium-pressure-process polyethylene, polypropylene, poly(4-methyl-1-pentene), poly(1-butene), and polystyrene and olefin copolymers such as ethylene/propylene copolymers, ethylene/butane copolymers, and propylene/1-butene copolymers. Preferred of these olefin polymers are the propylene polymers.

As stated above, the propylene block copolymer of the invention not only has satisfactory adhesion to olefin polymers but has an affinity for polar substances. Due to such properties, the propylene block copolymer of the invention is especially useful as an interior automotive material, exterior automotive material, primer for the housings of domestic electrical appliances, and coating material.

For use in these applications, various resins may be incorporated as minor components into the propylene block copolymer of the invention according to need. Examples of these resins include unmodified stereoblock propylene polymers, chlorinated polyolefins such as chlorinated polyethylene, chlorinated polypropylene, and chlorinated poly (ethylene-propylene), chlorosulfonated polyolefins, nitrocellulose, ethylene/vinyl acetate copolymers or chlorinated or chlorosulfonated polymers obtained therefrom, maleic acid resins, poly(vinyl chloride) resins, vinyl chloride/vinyl acetate copolymers, acrylic resins, polyester resins, polyamide resins, polycarbonate resins, phenolic resins, alkyd resins, and polyurethane resins. Polymers may be mixed according to need.

EXAMPLES

The invention will be explained below in more detail by reference to Examples, but the invention should not be construed as being limited to the following Examples unless the invention departs from the spirit thereof. In the following Examples, a catalyst synthesis step and a polymerization step were wholly conducted in a purified-nitrogen atmosphere, and the solvents were used after dehydration with a molecular sieve (MS-4A):and subsequent degassing by bubbling with purified nitrogen.

For evaluating properties of each polymer obtained, the polymer was examined for molecular weight and $^{13}$C-NMR spectrum under the conditions (1) and (2) shown below. For evaluating properties of a coating film obtained from the polymer, the surface hydrophilicity thereof was examined under the conditions (3) shown below.

(1) Determination of Molecular Weight:

The weight-average molecular weight of the polymer obtained was determined by GPC. The GPC apparatus used was "Type 150CV" manufactured by Waters Inc. As a solvent was used o-dichlorobenzene. The measuring temperature was 135°C.

(2) Examination for $^{13}$C-NMR Spectrum:

In a 10-mmϕ sample tube for NMR spectroscopy, 100-500 mg of a sample is completely dissolved in about 2.2 mL of o-dichlorobenzene. Subsequently, about 0.2 mL of deuterated benzene is added thereto as a lock solvent and this mixture is homogenized. Thereafter, the resultant sample is examined at 130°C by the complete proton decoupling method. Examination conditions include a flip angle of 90° and a pulse duration of 5 $T_1$ or longer ($T_1$ is the longest value of the spin-lattice relaxation time for the methyl group). In propylene polymers, since the spin-lattice relaxation times for the methylene group and methine group are shorter than that for the methyl group, the magnetization recovery of all carbon under those examination conditions is 99% or higher.

(i) Pentad Examination (unit of the results in the Examples is % by mole)

The chemical shift of the peak attributable to the methyl group of the third unit in the set of five successive propylene units which have the same absolute configuration of the methyl branch, i.e., which is represented by mmmm, among the ten kinds of pentads *(mmmm,* mmmr, *rmmr, mmrr, mmrm, rmrr, rmrm, rrrr,* rrrm, and *mrrm)* in the propylene unit chain part formed by head-to-tail bonding is regarded as at 21.8 ppm, and this position is used as a reference to determine the positions of the chemical shifts of other carbon peaks. When that reference is used, the position of the chemical shift of the peak attributable to the methyl group of the third unit in each of the other sets of five successive propylene units is, for example, substantially as follows: *mmmr,* 21.5-21.7 ppm; *rmmr*, 21.3-21.5 ppm; *mmrr*, 21.0-21.1 ppm; *mmrm* and *rmrr,* 20.8-21.0 ppm; *rmrm,* 20.6-20.8 ppm; *rrrr,* 20.3-20.5 ppm; *rrrm*, 20.1-20.3 ppm; *mrrm* 19.9-20.1 ppm. Incidentally, when assignment is made, attention should be given to the facts that the chemical shifts of the peaks attributable to these pentads fluctuate slightly depending on the conditions of NMR spectroscopy and that each pentad does not always give a single peak but frequently shows a complicated split pattern due to a fine structure.

(ii) Examination of 2,1-Insertion and 1,3-Insertion

Although the polymerization of propylene usually proceeds through 1,2-insertion in which the methylene group combines with an active site of the catalyst, there are rarely cases where 2,1-insertion or 1,3-insertion occurs. Propylene monomer polymerized through 2,1-insertion forms regio irregular units represented by the following partial structures (I) and (II) in the polymer main chain. On the other hand, propylene monomer polymerized through 1,3-insertion forms regio irregular units represented by the following partial structure (III) in the polymer main chain.

Partial Structure ( I )

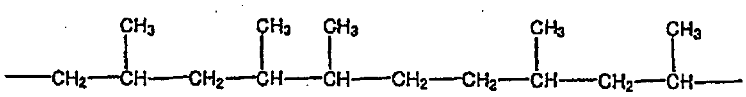

Partial Structure ( II )

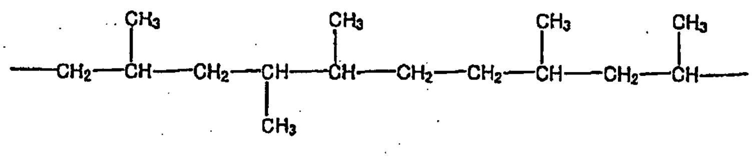

Partial Structure ( III )

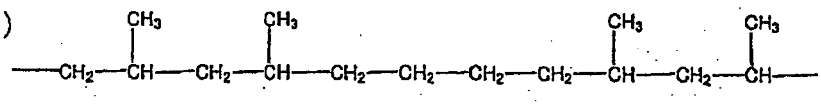

The proportion of propylene monomer polymerized through 2,1-insertion and the proportion of propylene monomer polymerized through 1,3-insertion to all propylene insertion are calculated using the following equations.

Formula 1

$$\text{Proportion of 2,1-insertion} = \frac{\Sigma I(14.5 - 18.0)/2}{\Sigma I(CH_3)}$$

$$\text{Proportion of 1,3-insertion} = \frac{\Sigma I(27.5 - 28.0)/2}{\Sigma I(CH_3)}$$

In the equations, $\Sigma I(x\text{-}y)$ represents the sum of the integrated intensities for the signals appearing in the range of from x ppm to y ppm in the $^{13}C$-NMR spectrum and $\Sigma I(CH_3)$ is the sum of the integrated intensities for the signals attributable to all methyl groups excluding the terminal ones in the spectrum. The latter is determined using the following equation.

Formula 2

$$\Sigma I(CH_3) = \Sigma I(14.5 - 18.0) + \Sigma I(19.5 - 24.4) + \Sigma I(27.5 - 28.0)/2$$

Incidentally, the signal appearing at 14.5-18.0 ppm is one attributable to the methyl carbon of propylene polymerized through 2,1-insertion, while the peak appearing at 19.5-24.4 ppm is one attributable to the methyl carbon of propylene polymerized through 1,2-insertion. Furthermore, the signal appearing at 27.5-28.0 ppm is one attributable to the two methylene carbons in propylene polymerized through 1,3-insertion.

(3) Surface hydrophilicity was judged through a writing test with a water-based pen. The writing test was conducted in the following manner. In 1 mL of THF was dissolved 100 mg of each polymer. This solution was dropped onto an OPP film, spread into a film, and dried. Whether a line could be drawn on this film surface with a water-based pen was used as an index to the hydrophilicity of the film surface.

(4) An adhesiveness test was conducted in the following manner. In 5 mL of toluene and 250 μL of ethanol was dissolved 500 mg of a copolymer. This solution was applied with a 0.12-mm bar coater to an oriented polypropylene (OPP) film over an area with a length of 20 cm and a width of 10 cm. This film was allowed to stand at room temperature for 3 days to dry the coating. Thereafter, a pressure-sensitive adhesive tape (Cellophane Tape (trademark), manufactured by Nichiban Co., Ltd.) was applied to the coating film, and a specimen of a 150×10 mm dumbbell shape was punched out thereof. This specimen was pulled with Tensilon Type RTC-1210A, manufactured by Orientec Co., Ltd., at a test speed of 500 mm/min, and the surface was examined.

[EXAMPLE 1] Production of OH-Terminated Propylene Polymer

(i) Synthesis of Dichloro[dimethylsilylene-(cyclopentadienyl)(2,4-dimethyl-4H-1-azulenyl)zirconium

(i)-1: Ligand Synthesis

2-Methylazulene (12.10 g; 0.085 mol) was dissolved in tetrahydrofuran (168 mL) and this solution was cooled to 5°C with an ice bath. Thereafter, a diethyl ether solution of methyllithium (1.04 mol/L; 83 mL; 0.086 mol) was added dropwise to that solution at that' temperature. After completion of the dropwise addition, the ice bath was removed and the mixture was stirred for 3 hours. The resultant solution was gradually added dropwise to a tetrahydrofuran solution (420 mL) of dimethylsilyl dichloride (22.5 mL; 0.185 mol) which had been cooled to 5°C with an ice bath. After completion of the dropwise addition, the ice bath was removed and the mixture was stirred for 3 hours. Thereafter, the solvent and the dimethylsilyl dichloride remaining unreacted were distilled off under reduced pressure. Tetrahydrofuran (240 mL) was added to the residue and this mixture was cooled to 0°C. Cyclopentadienylsodium (2.1 mol/L; 81 mL; 0.160 mol) was gradually added thereto dropwise. After completion of the dropwise addition, the resultant mixture was stirred at room temperature for 24 hours. After completion of the stirring, water was added thereto and the target compound was extracted with diethyl ether. The extract was dehydrated with magnesium sulfate and then dried. Thus, an unpurified product of the target ligand was obtained.

(i)-2: Complex Synthesis

In 90 mL of tetrahydrofuran was dissolved 10.56 g (0.038 mol) of the ligand obtained in (i)-1 in Example 1. This solution was cooled to 5°C with an ice bath. An n-hexane solution of n-butyllithium (1.59 mol/L; 47.3 mL; 0.075 mol) was gradually added dropwise to that solution at that temperature. After completion of the dropwise addition, the ice bath was removed and the mixture was stirred for 2 hours. The solvent was distilled off under reduced pressure. Thereafter, 200 mL of toluene and 10 mL of tetrahydrofuran were added to the residue obtained and the resultant mixture was cooled to -78°C. Thereto was gradually added 8.73 g (0.038 mol) of zirconium tetrachloride. Thereafter, the cooling bath

was removed and the mixture was stirred overnight. After completion of the stirring, the liquid reaction mixture was filtered through a glass frit. The solid on the frit was further washed with toluene and the filtrate was concentrated, whereby a brown powder was obtained. The target complex was extracted from this brown powder with toluene/hexane (70 mL/100 mL). The extract was dried and the solid obtained was subjected twice to suspension washing with 200 mL of hexane and then subjected three times to suspension washing with 15 mL of ether. This operation was conducted once again. Thereafter, the solid was dried under vacuum to obtain 2.3 g of dichloro[dimethylsilylene-(cyclopentadienyl)(2,4-dimethyl-4H-1-azulenyl)]zirconium as the target compound (yield, 14%).
$^1$H-NMR ($CDCl_3$); δ 0.86 (s, 3H), 0.87 (s, 3H), 1.48 (d, J=7.0 Hz, 3H), 2.17 (s, 3H), 3.30-3.42 (m, 1H), 5.42 (dd, J=4.8, 10.1 Hz, 1H), 5.80-5.89 (m, 2H), 5.95-6.02 (m, 1H), 6.15-6.25 (m, 1H), 6.32 (s, 1H), 6.58 (d, J=11.6 Hz, 1H), 6.88-6.92 (m, 1H), 7.08-7.10 (m, 1H).
NCI-MS (M) (438).

(ii) Chemical Treatment of Clay Mineral

In a 300-mL round-bottom flask were placed 113.4 mL of desalted water, 16.26 g of lithium hydroxide, and 66.40 g of sulfuric acid. The contents were stirred for dissolution. To this solution was dispersed 41.58 g of a commercial granulated montmorillonite (Benclay SL, manufactured by Mizusawa Chemicals, Ltd.). The resultant dispersion was refluxed for 140 minutes with stirring. Thereafter, 600 mL of desalted water was added to the dispersion to cool it, and the resultant slurry was centrifuged. The supernatant was removed by decantation and a wet cake was recovered. The cake recovered was suspended in 600 mL of desalted water, and this suspension was likewise subjected to centrifuging and decantation. This operation was repeated twice. The cake finally obtained was dried at 100°C for 3 hours. Thus, 35.63 g of a chemically treated montmorillonite was obtained.
A 0.51-g portion of the chemically treated montmorillonite obtained was vacuum-dried at 200°C for 2 hours (0.49 g after the drying). A toluene solution of triethylaluminum (0.45 mmol/mL; 2.2 mL) was added thereto, and this mixture was stirred at room temperature for 30 minutes. Twenty milliliters of toluene was added to the resultant suspension and the supernatant was removed after stirring. This operation was repeated twice to obtain a clay slurry.

(iii) Polymerization

To 16.0 mg (36.3 μmol) of the dichloro[dimethylsilylene(cyclopentadienyl)(2,4-dimethyl-4H-1-azulenyl)]zirconium obtained in (i) in Example 1 was added 12.4 mL of toluene to prepare a complex solution.
Into another flask were introduced 5.1 mL of the complex solution (2.93 μmol/mL) and triisobutylaluminum (0.15 mmol) manufactured by Nippon Aluminum Alkyls, Ltd. Each component was reacted to obtain a toluene solution. This complex solution was added to the clay slurry, and the resultant mixture was stirred at room temperature for 40 minutes to obtain a catalyst slurry (64.13 mg/mL).
Subsequently, 0.25 mmol of triisobutylaluminum was introduced into an induction stirring type 2-L autoclave the atmosphere in which had been replaced by purified nitrogen. Thereinto was further introduced 7.7 mL of the catalyst slurry. While the contents in the autoclave were being stirred, 625 g of liquefied propylene was introduced at room temperature. Thereafter, the temperature of the contents was elevated to 80°C to initiate polymerization. At 80°C, the internal pressure of the autoclave was 3.7 MPa. The polymerization was conducted at 80°C for 75 minutes and then terminated by purging away the monomer. Thus, 386 g of a polymer was obtained.
The polymer obtained was diluted with toluene so as to result in a concentration of 10% by weight, and then heated to 50°C in a nitrogen atmosphere. This solution was filtered through a glass frit to remove the catalyst residue and other impurities contained in the polymer. Thereafter, the solvent was removed to obtain a pure polymer.
In this polymer, components having an Mw (9100) and an *mmmm* (29.6) and having a terminal double bond accounted for 57% of the whole polymer.

(iv) Synthesis of OH-Terminated Polypropylene

In 500 mL of tetrahydrofuran was dissolved 43 g of the polypropylene obtained in (iii) in Example 1. After this solution was sufficiently degassed, 50 mL of 0.5 M 9-BBN was introduced and the resultant solution was refluxed for 7 hours. Thereafter, 500 mL of isopropyl alcohol was introduced to precipitate a polymer, which was washed and dried. The B-terminated polypropylene obtained was dissolved in 300 mL of tetrahydrofuran, and a solution prepared by dissolving 1.5 g of sodium hydroxide in a mixed solvent consisting of 15 mL of desalted water, 15 mL of methanol, and 30 mL of tetrahydrofuran was introduced. Furthermore, 6.1 mL of 31% aqueous hydrogen peroxide solution was introduced and the resultant mixture was stirred at room temperature for 5 hours. Thereafter, this mixture was poured into a large amount of methanol to thereby precipitate a polymer. This polymer was purified by repeatedly conducting redissolution in tetrahydrofuran and reprecipitation from methanol, and then dried at 40°C for 7 hours. Thus, 27 g of a polymer

was obtained. In 1H-NMR analysis, the polymer obtained showed a signal at 3.8-3.4 ppm attributable to OH groups, and the signal at 5.7-4.7 ppm attributable to the olefin had almost disappeared. It was thus ascertained that terminal hydroxylation had proceeded.

[EXAMPLE 2] Synthesis of Amino-Terminated Polypropylene

First, 4-{2-[N,N-bis(trimethylsilyl)amino]ethyl} styrene (hereinafter referred to as VSA) was synthesized by the method described in J.Y. Dong et al., *Macromol.,* 35, 9352 (2002).

Subsequently a chemically treated montmorillonite obtained in the same manner as in Example 1 (ii) was vacuum-dried at 200°C for 2 hours to obtain the dried montmorillonite in an amount of 1.0 g on a dry basis. Thereto was added a toluene solution of triethylaluminum (0.5 mmol/mL; 7.0 mL). This mixture was stirred at room temperature for 30 minutes. Twenty milliliters of toluene was added to the resultant suspension and the supernatant was removed after stirring. This operation was repeated twice to obtain a clay slurry.

On the other hand, 12.4 mL of toluene was added to 16.0 mg (36.3 μmol) of the dichloro [dimethylsilylene-(cyclopentadienyl)(2,4-dimethyl-4H-1-azulenyl)]zirconium obtained in (i) in Example 1. Thus, a complex solution was prepared.

Into another flask were introduced 6.8 mL of the complex solution (2.94 μmol/mL) and triisobutylaluminum (0.2 mmol) manufactured by Nippon Aluminum Alkyls, Ltd. The components were reacted to obtain a toluene solution. This complex solution was added to the clay slurry, and the resultant mixture was stirred at room temperature for 40 minutes-to obtain a catalyst slurry.

Subsequently, 1,000 mL of purified toluene from which water and oxygen had been removed was introduced into an induction stirring type 2-L autoclave the atmosphere in which had been replaced by purified nitrogen. Thereinto was further introduced 0.35 mmol of triisobutylaluminum. Subsequently, 20 mL of the VSA obtained above was introduced at room temperature.

While the contents in the autoclave were being stirred, 250 g of propylene was introduced at room temperature and the temperature of the contents was elevated to 55°C. At this point of time, the internal pressure of the autoclave was 0.95 MPaG. The catalyst slurry was then forced into the autoclave with nitrogen to initiate polymerization. The internal pressure just after the forced introduction with nitrogen was 1.1 MPaG. Because of this, propylene was successively fed intermittently so as to maintain the internal pressure of 1.1 MPaG. The polymerization was conducted at 55°C for 1 hour and then terminated by forcing 20 mL of methanol into the autoclave with nitrogen.

The propylene remaining unreacted was purged away. Thereafter, 30 g of a 2 N methanol solution of hydrochloric acid was added to the polymer solution obtained. This mixture was stirred for 3 hours and then allowed to stand overnight. Subsequently, 60 g of a 1 N methanol solution of sodium hydroxide was added thereto and the mixture was stirred for 3 hours. This liquid reaction mixture was filtered and the polymer obtained was washed with ammonia water twice and with water three times. Finally, the polymer was vacuum-dried at 100°C for 6 hours to obtain the target stereoblock polypropylene containing a terminal amino group. The amount of this polymer yielded was 20 g, and the *mmmm* content in the propylene chain part was 24.7%.

[EXAMPLE 3] (Propylene Block Copolymer (Propylene Polymer/Acrylic Acid Polymer))

(i) Synthesis of Br-Terminated Polypropylene

In 200 mL of methylene chloride was dissolved 20.7 g of the hydroxylated polypropylene obtained in Example 1. Separately from this, 2.0 mL of triethylamine was added to a solution of 0.83 g of DMAP (4-(dimethylamino)pyridine) in 100 mL of methylene chloride, and 1.2 mL of PBC (2-bromopropionyl chloride) was added thereto at 0°C. Thereto was added the solution of the hydroxylated polypropylene over 67 minutes. This mixture was heated to room temperature and stirred overnight. The solvent was distilled off in an amount of 200 mL, and 420 mL of toluene was added to the residue. The solid was taken out by filtration, and 1,000 mL of methanol was added to the filtrate to cause reprecipitation. This reaction product was purified by repeatedly conducting dissolution in toluene and reprecipitation from methanol. The precipitate was dried at 40°C for 1 day to obtain 17 g of a polymer. The polymer obtained gave a $^1$H-NMR spectrum in which the peak at 3.8-3.4 ppm attributable to OH had almost disappeared and peaks attributable to $CH_3$-CHBr and to OCO-$CH_2$ were observed at 4.4 ppm and 4.2-3.9 ppm, respectively. These results showed that bromination had proceeded almost quantitatively.

(ii) Production of Propylene Block Copolymer

Into a flask were introduced all of 10.0 g of the brominated polypropylene obtained in Example 3-(i), 14.2 mL of t-butyl acrylate, 373 mg of cuprous bromide, and 0.52 mL of PMDETA (N,N,N',N'',N''-pentamethyldiethylenetriamine).

The resultant mixture was degassed and reacted at 120°C for 1 hour.

The copolymer obtained was dissolved in 50 mL of toluene. Thereto was added 5 mL of a toluene slurry of 0.1 g of p-toluenesulfonic acid monohydrate to conduct hydrolysis at 96°C for 2 hours. Thereafter, the liquid reaction mixture was poured into a large amount of cold methanol to cause reprecipitation. Simultaneously therewith, the homopolymer of acrylic acid was removed. After washing with methanol was repeated, the precipitate was washed with hexane and dried. Thus, 8.7 g of a polymer was obtained. Analysis by 1H-NMR revealed that the propylene/acrylic acid molar ratio was 79/21. The molecular weight of the copolymer as determined from that ratio was about 13,200.

(iii) Property Examination

The polymer obtained above was dissolved in toluene to obtain a 10% solution. A cast film thereof was formed on an oriented polypropylene film. The cast film showed no tackiness. Writing with a water-based pen was conducted on this film. As a result, the writing with the water-based ink was exceedingly satisfactory. In the tensile test, no peeling was observed between the OPP as a substrate and the coating film.

[COMPARATIVE EXAMPLE 1] (Acrylic-Acid-Grafted Propylene Polymer)

Into a 500-mL round-bottom flask equipped with a thermometer and a stirrer were introduced 50 g of the polypropylene obtained in Example 1 (iii) and 60 mL of toluene. The atmosphere in the vessel was replaced by nitrogen gas, and the contents were heated to 130°C. After the heating, 5 g of maleic anhydride and a toluene solution (0.5 g/mL) of 2.5 g of t-butyl peroxyisopropyl monocarbonate (Perbutyl I, manufactured by Nippon Oil & Fats Co., Ltd.) were fed through separate introduction tubes over 2 hours, and the resultant mixture was aged at the same temperature for 2 hours. After completion of the reaction, the system was cooled to around room temperature, and acetone was added thereto. The polymer precipitated was taken out by filtration. Precipitation with acetone and separation by filtration were further repeated, and the polymer finally obtained was washed with acetone. After the washing, the polymer obtained was vacuum-dried to thereby obtain a modified resin as a white powder. This modified resin was subjected to infrared absorption spectroscopy, neutralization titration, etc. As a result, the content of maleic anhydride groups was found to be 3.2 wt%.

Into a 300-mL round-bottom flask was introduced 10.0 g of the maleic-acid-grafted polypropylene. This polypropylene was dissolved in 100 mL of toluene and the resultant solution was degassed by nitrogen bubbling. Into this flask was introduced 10.2 mL of acrylic acid. This mixture was heated to 80°C. At 80°C, 32.1 mg of 2,2'-azobis(2-methylbutyronitrile) was introduced to initiate a reaction. The reaction mixture was stirred for 5 hours and then cooled. The solvent was removed to dry the reaction product. A 5-g portion was taken from the polymer obtained and was dissolved in 25 mL of toluene and 25 mL of isopropyl alcohol. To this solution was added 100 mL of acetonitrile to cause reprecipitation. The precipitate was further washed with acetonitrile and vacuum-dried at 80°C for 6 hours.

Analysis by 1H-NMR revealed that the propylene/acrylic acid molar ratio was 70/30. The molecular weight of the copolymer as determined from that ratio was about 15,600.

The polymer obtained was subjected to the writing test with a water-based pen in the same manner as in Example 3. As a result, writing with the water-based ink was impossible. The adhesiveness test was further conducted and, as a result, the coating film was wholly adherent to the Cello Tape and had peeled off the OPP.

[EXAMPLE 4] (Propylene Block Polymer (Propylene

Polymer/Acrylic Acid Polymer/Methyl Acrylate Polymer)

Into a flask were introduced all of 10.1 g of a brominated polypropylene obtained in the same manner as in (i) in Example 3, 25 mL of t-butyl acrylate, 380 mg of cuprous bromide, and 0.52 mL of PMTEDA. The resultant mixture was degassed and reacted at 104°C for 1 hour.

The copolymer obtained was dissolved in 80 mL of toluene. Thereto was added 5 mL of a toluene slurry of 0.16 g of p-toluenesulfonic acid monohydrate to conduct hydrolysis at 104°C for 1 hour. Thereafter, the liquid reaction mixture was poured into a large amount of cold methanol to cause reprecipitation. Simultaneously therewith, the homopolymer of acrylic acid was removed. After washing with methanol was repeated, the precipitate was washed with hexane and dried. Thus, 9.1 g of a polymer was obtained. Analysis by 1H-NMR revealed that the propylene/acrylic acid/methyl acrylate molar ratio was 68/27/5. The molecular weight of the copolymer as determined from that ratio was about 16,600.

The polymer obtained was subjected to the writing test with a water-based pen in the same manner as in Example 3. As a result, writing with the water-based ink was exceedingly satisfactory. In the tensile test, no peeling was observed between the OPP as a substrate and the coating film.

[EXAMPLE 5] (Propylene Block Polymer (Propylene

Polymer/Acrylic Acid Polymer/Methyl Acrylate Polymer)

Into a flask were introduced all of 9.7 g of a brominated polypropylene obtained in the same manner as in (i) in Example 3, 10 mL of t-butyl acrylate, 367 mg of cuprous bromide, and 0.50 mL of PMDETA. The resultant mixture was degassed and reacted at 100°C for 1 hour.

The copolymer obtained was dissolved in 50 mL of toluene. Thereto was added 5 mL of a toluene slurry of 0.10 g of p-toluenesulfonic acid monohydrate to conduct hydrolysis at 104°C for 1 hour. Thereafter, the liquid reaction mixture was poured into a large amount of cold methanol to cause reprecipitation. Simultaneously therewith, the homopolymer of acrylic acid was removed. After washing with methanol was repeated, the precipitate was washed with hexane and dried. Thus, 5.6 g of a polymer was obtained. Analysis by 1H-NMR revealed that the propylene/acrylic acid/methyl acrylate molar ratio was 73/27. The molecular weight of the copolymer as determined from that ratio was about 14,800.

The polymer obtained was subjected to the writing test with a water-based pen in the same manner as in Example 3. As a result, writing with the water-based ink was satisfactory. In the tensile test, no peeling was observed between the OPP as a substrate and the coating film.

[EXAMPLE 6] (Propylene Block Polymer (Propylene

Polymer/Acrylic Acid Polymer/Methyl Acrylate Polymer)

Into a flask were introduced all of 9.5 g of a brominated polypropylene obtained in the same manner as in (i) in Example 3, 5.0 mL of t-butyl acrylate, 354 mg of cuprous bromide, and 0.52 mL of PMDETA. The resultant mixture was degassed and reacted at 104°C for 1 hour.

The copolymer obtained was dissolved in 50 mL of toluene. Thereto was added 5 mL of a toluene slurry of 0.1 g of p-toluenesulfonic acid monohydrate to conduct hydrolysis at 105°C for 1 hour. Thereafter, the liquid reaction mixture was poured into a large amount of cold methanol to cause reprecipitation. Simultaneously therewith, the homopolymer of acrylic acid was removed. After washing with methanol was repeated, the precipitate was washed with hexane and dried. Thus, 5.0 g of a polymer was obtained. Analysis by 1H-NMR revealed that the propylene/acrylic acid molar ratio was 88/12. The molecular weight of the copolymer as determined from that ratio was about 11,200.

The polymer obtained was subjected to the writing test with a water-based pen in the same manner as in Example 3. As a result, writing with the water-based ink was possible. In the tensile test, no peeling was observed between the OPP as a substrate and the coating film.

[COMPARATIVE EXAMPLE 2] (Propylene Polymer (stereoblock))

A polypropylene (homopolymer) obtained in the same manner as in (i) to (iii) in Example 1 was subjected to the writing test with a water-based pen in the same manner as in Example 3. As a result, writing with the water-based ink was impossible. In the tensile test, no peeling was observed between the OPP as a substrate and the coating film.

[COMPARATIVE EXAMPLE 3] (Propylene Polymer (atactic))

(i) Production of Solid Catalyst Component

Into a 100-L reactor equipped with a stirring blade, thermometer, jacket, and cooling coil was introduced 30 mol of $Mg(OEt)_2$. Subsequently, $Ti(OBu)_4$ was introduced in such an amount that the proportion thereof to the magnesium in the $Mg(OEt)_2$ introduced, i.e., $Ti(OBu)_4/Mg$, was 0.60 (molar ratio). Furthermore, 19.2 kg of toluene was introduced, and the resultant mixture was heated with stirring. The mixture was reacted at 139°C for 3 hours. Thereafter, the temperature of the mixture was lowered to 130°C, and a toluene solution of $MeSi(OPh)_3$ was added thereto in such an amount that the proportion thereof to the magnesium in the $Mg(OEt)_2$ introduced earlier, i.e., $MeSi(OPh)_3/Mg$, was 0.67 (molar ratio). Incidentally, the amount of the toluene used here was 7.8 kg. After completion of the addition, the mixture was reacted at 130°C for 2 hours. Thereafter, the mixture was cooled to room temperature and $Si(OEt)_4$ was added thereto. The amount of the $Si(OEt)_4$ to be added was regulated so that the proportion thereof to the magnesium in the Mg (OEt) introduced earlier, i.e., $Si(OEt)_4/Mg$, was 0.056 (molar ratio).

Subsequently, toluene was added to the resultant reaction mixture in such an amount as to result in a magnesium concentration of 0.58 (mol/L). Furthermore, diethyl phthalate (DEP) was added thereto in such an amount that the proportion thereof to the magnesium in the Mg(OEt)2 introduced earlier, i.e., DEP/Mg, was 0.10 (molar ratio). The mixture obtained was cooled to -10°C with continuous stirring, and $TiCl_4$ was added dropwise thereto over 2 hours to obtain a

homogeneous solution.

Incidentally, the $TiCl_4$ was introduced in such an amount that the proportion thereof to the magnesium in the $Mg(OEt)_2$ introduced earlier, i.e., $TiCl_{9/}Mg$, was 4.0 (molar ratio). After completion of the $TiCl_4$ addition, the resultant mixture was heated to 15°C at 0.5 °C/min with stirring and held at this temperature for 1 hour. Subsequently, the mixture was heated again to 50°C at 0.5 °C/min and held at this temperature for 1 hour. Furthermore, the mixture was heated to 118°C at 1 °C/min and treated at this temperature for 1 hour. After completion of the treatment, the stirring was stopped and the supernatant was removed. Thereafter, the residue was washed with toluene so as to result in a residue proportion of 1/73. Thus, a slurry was obtained.

Subsequently, toluene and $TiCl_4$ were added at room temperature to the slurry obtained above. Incidentally, the $TiCl_4$ was added in such an amount that the proportion thereof to the magnesium in the $Mg(OEt)_2$ introduced earlier, i.e., $TiCl_4/Mg(OEt)_2$, was 5.0 (molar ratio). The toluene amount was regulated so as to result in a $TiCl_4$ concentration of 2.0 (mol/L). While being stirred, this slurry was heated and reacted at 118°C for 1 hour. After completion of the reaction, the stirring was stopped and the supernatant was removed. Thereafter, the residue was washed with toluene so as to result in a residue proportion of 1/150. Thus, a slurry of a solid catalyst component was obtained.

(ii) Treatment of Solid Catalyst Component

The slurry of a solid catalyst component obtained in Comparative Example 3 (i) was placed in a 100-mL eggplant type flask in an amount of 117.3 mg in terms of the amount of the solid catalyst component. While this slurry was being stirred, 0.27 mmol of triethylaluminum was added dropwise thereto at room temperature. After completion of the dropwise addition, the mixture was continuously stirred at room temperature for 30 minutes.

(iii) Polymerization of Propylene

Into an induction stirring type 2-L autoclave were introduced 2.0 mmol of triethylaluminum and 0.05 mmol of $t\text{-}BuEtSi(OMe)_2$ at room temperature in a nitrogen stream. Subsequently, 750 g of liquid propylene was introduced and hydrogen was then added thereto in such an amount as to result in a hydrogen concentration in the gas phase at 70°C of 13 mol%. While the resultant mixture was being stirred, it was heated to 70°C and, at the time when the temperature reached 70°C, the solid catalyst component treated with triethylaluminum in Comparative Example 3 (ii) was added in an amount of 11.6 mg in terms of solid catalyst component amount to initiate polymerization. The polymerization was conducted at 70°C for 1 hour and then terminated by purging away the excess propylene. Thus, a propylene polymer was obtained in an amount of 505 g.

(iv) Modification of Propylene Polymer

The following reaction was conducted by reference to U.W. Suter et al., *J. Am. Chem. Soc.*, 14, 528 (1981).

In a microautoclave having a capacity of 50 mL was placed 2.0 g of the propylene polymer obtained in (iii) above. Subsequently, n-heptane (8.0 mL) and Pd/C (0.5 g) were added thereto, and the resultant mixture was reacted at 320°C for 5 hours at a hydrogen pressure of 5.0 MPa. After completion of the reaction, the catalyst was taken out by filtration and the solvent was removed under reduced pressure to obtain 2.0 g of a modified propylene polymer. Mw (100,000); mmmm (18).

(v) Property Evaluation

The modified propylene polymer obtained in (iv) above was subjected to property evaluation in the same manner as in Example 1 (iv). The polymer was dissolved in toluene at room temperature to prepare a 10 wt% solution. As a result, solubility was satisfactory and no insoluble matter was present. The toluene solution thus obtained was applied to an OPP film and then dried. However, the coating film formed was considerably tacky.

[COMPARATIVE EXAMPLE 4] (Propylene Polymer (isotactic))

(i) Synthesis of 2,2-Propylidene(3-t-butylcyclopentadienyl)(10-(5-phenyl-5-hydrobenz[a]azulenyl)zirconium Dichloride

(i)-1 Synthesis of 2-t-Butyl-6,6-dimethylfulvene

In a nitrogen atmosphere, 4.4 mL of acetone was added at room temperature to a solution of 7.33 g (60.0 mmol) of t-butylcyclopentadiene (a mixture of double-bond position isomers) in 60 mL of dry methanol. Furthermore, 7.51 mL (90 mmol) of pyrrolidine was added dropwise thereto over 8 minutes. After the resultant mixture was stirred at

room temperature for 27 hours, 10.8 mL of acetic acid was added thereto. To this reaction mixture were added 300 mL of water and 300 mL of ether. The resultant mixture was allowed to separate into an organic phase and an aqueous phase. The aqueous phase was extracted with ether. The extract was added to the organic phase, and this mixture was washed with water and saturated aqueous common-salt solution and then dried with magnesium sulfate. Thereafter, the solvent was distilled off under reduced pressure. The residue was distilled to obtain an orange liquid. This liquid had a boiling point of 116°C (38 mmHg) and was obtained in an amount of 3.24 g. The yield thereof was 33%.

(i)-2 Synthesis of 2,2-Propylidene(3-t-butylcyclopentadienyl){(10-(5-phenyl-5-hydrobenz[a]azulenyl))zirconium Dichloride

In a nitrogen atmosphere, 3.8 mL of a cyclohexane/ether solution of phenyllithium (0.94 mol/L) was added dropwise to a solution of 0.63 g (3.53 mmol) of benz[a]azulene in 10 mL of dry tetrahydrofuran at -23°C over 5 minutes. After completion of the dropwise addition, the reaction mixture was stirred at that temperature for 30 minutes. Thereafter, a solution of 0.57 g (3.53 mmol) of 2-t-butyl-6,6-dimethylfulvene in 5 mL of dry tetrahydrofuran was added dropwise to the resultant reaction solution at -78°C over 10 minutes. After completion of the dropwise addition, the mixture was stirred for 15 hours while gradually elevating the temperature thereof to room temperature. Thereafter, 40 mL of saturated aqueous ammonium chloride solution was added thereto to terminate the reaction.

The organic phase was separated, and the aqueous phase was extracted with ether. The extract was added to the organic phase, and this mixture was washed with water and saturated aqueous common-salt solution and then dried with magnesium sulfate. Thereafter, the solvent was distilled off under reduced pressure at room temperature. The residue was purified by silica gel column chromatography (n-hexane). Thus, 0.37 g of an amorphous mixture of (2-t-butyl-4-methylcyclopentadien-1-yl)dimethyl(5-phenyl-5,10-dihydrobenz[a]azulen-10-yl)silane and a double-bond position isomer thereof was obtained.

(i)-3 Complex Synthesis

The reaction product mixture was dissolved in dry ether (10 mL). The solution was cooled to -78°C, and 1.45 mL of an n-hexane solution of n-butyllithium (1.54 mol/L) was added dropwise thereto over 5 minutes. This liquid reaction mixture was stirred for 15 hours while gradually elevating the temperature thereof to room temperature. Thereafter, the solvent was distilled off under reduced pressure at room temperature. The residue was suspended in a mixed solvent consisting of 14.5 mL of dry toluene and 0.5 mL of dry ether. At -78°C, 0.25 g (1.1 mmol) of zirconium tetrachloride was added to the suspension over 1 minute.

The reaction mixture was stirred for 9 hours while gradually elevating the temperature thereof to room temperature. Thereafter, the solvent was distilled off under reduced pressure at room temperature. The residue was suspended in dry methylene chloride, and this suspension was filtered in a nitrogen atmosphere. The filtrate was concentrated to 5 mL under reduced pressure at room temperature. To this concentrate was added 30 mL of dry hexane. The resultant precipitate was taken out by filtration in a nitrogen atmosphere and washed with dry hexane. The solvent in the filtrate and in the washings was distilled off under reduced pressure at room temperature. The residue was dissolved in a minimum amount of dry methylene chloride. Dry hexane was added to this solution to separate out a precipitate. The precipitate was taken out by filtration in a nitrogen atmosphere and washed with dry hexane. The filtrate obtained was added to the washings, and the solvent was distilled off under reduced pressure at room temperature to obtain a yellow solid. Analysis by mass spectrometry revealed that the solid obtained was the target compound, i.e., 2,2-propylidene (3-t-butylcyclopentadienyl){(10-(5-phenyl-5-hydrobenz[a]azulenyl))zirconium dichloride}.

(ii) Polymerization

In a nitrogen atmosphere, 7.9 mL of a toluene solution of MMAO (15 mmol) and 3.0 mL of a toluene solution of the complex (5.2 μmol) obtained in Comparative Example 5 (i)-3 were introduced in this order into an autoclave having a capacity of 1 L at room temperature. Thereafter, 700 mL of liquid propylene was added thereto to conduct polymerization for 1 hour at an elevated temperature of 70°C. The polymer obtained was dried in hot air. The amount of the polymer yielded was 9.8 g. *mmmm* (99).

(iii) Property Evaluation

It was attempted to dissolve the propylene polymer obtained in (ii) above in toluene at room temperature. However, the polymer did not substantially dissolve. It was therefore impossible to conduct tackiness evaluation and the examination of surface hydrophilicity and adhesiveness.

The results obtained above are shown in Table 1.

Table 1

| | Copolymer composition (mol%) | | | Hydrophilicity* | Adhesiveness** |
|---|---|---|---|---|---|
| | Propylene | Acrylic acid | Methyl acrylate | Water-based pen test | Cello Tape peel test |
| Example 3 | 79 | 21 | — | A | A |
| Example 4 | 68 | 27 | 5 | A | A |
| Example 5 | 73 | 27 | — | B | A |
| Example 6 | 88 | 12 | — | C | A |
| Comparative Example 1 | 70 | 30 | — | D | B |
| Comparative Example 2 | 100 | — | — | D | A |
| Comparative Example 3 | 100 | — | — | — | — |
| Comparative Example 4 | 100 | — | — | — | — |

Hydrophilicity*: A, excellent; B, good; C, possible; D, impossible
Adhesiveness**: A, no peeling; B, peeling occurred

A comparison between Example 3 and Comparative Example 1 in Table 1 clearly shows the effects of the invention.

Namely, the block copolymer of Example 3 shows satisfactory hydrophilicity and satisfactory adhesiveness to polypropylene although the amount of acrylic acid units, which are polar groups, therein is smaller than in the graft polymer of Comparative Example 1. In contrast, the polymer of Comparative Example 1, which had polar groups grafted thereto, was inferior not only in hydrophilicity but in adhesiveness.

Furthermore, the block copolymers of the other Examples, i.e., Examples 4 to 6, also attained satisfactory performance with respect to each of hydrophilicity and adhesiveness. From these results, the effects of the block copolymer of the invention are apparent.

While the invention has been described in detail and with reference to specific embodiments thereof, it will be apparent to one skilled in the art that various changes and modifications can be made therein without departing from the spirit and scope thereof.

This application is based on a Japanese patent application filed on July 14, 2003 (Application No. 2003-196540), the contents thereof being herein incorporated by reference.

INDUSTRIAL APPLICABILITY

The propylene block copolymer of the invention is a propylene block copolymer which has satisfactory adhesiveness to propylene polymers and excellent nontackiness and further has excellent surface hydrophilicity.

## Claims

**1.** A propylene block copolymer represented by the following formula (I):

PP-a-R (I)

(wherein PP represents a polypropylene segment in which the proportion of pentads represented by mmmm to all pentads is 10-60%; symbol a represents a group which connects PP to R; and R represents a polymer segment containing a polar group).

**2.** The propylene block copolymer according to claim 1, wherein the PP is a homopolymer of propylene or a copolymer of propylene and either at least one $\alpha$-olefin other than propylene or ethylene.

**3.** The propylene block copolymer according to claim 1 or 2, wherein the proportion of the R is from 15% by mole to 90% by mole in terms of the proportion of the monomer units thereof to the whole propylene block copolymer.

**4.** A process for producing the olefin block copolymer according to claim 1, **characterized by** polymerizing one or more polymerizable monomers with a propylene block polymer which has a substituent at an end and is represented by the following formula (II):

PP-X (II)

(wherein PP represents a polypropylene segment in which the proportion of pentads represented by mmmm to all pentads is 10-60%; and X represents a reactive group or a substituent containing a reactive group).

**5.** A propylene polymer which has a substituent at an end and is represented by the following formula (II):

PP-X (II)

(wherein PP represents a polypropylene segment in which the proportion of pentads represented by mmmm to all pentads is 10-60%; and X represents a reactive group or a substituent containing a reactive group).

**6.** The propylene polymer according to claim 5, wherein X is a hydroxyl group, an amino group, a mercapto group, or a group having any of these substituents.

**INTERNATIONAL SEARCH REPORT**

International application No.
PCT/JP2004/010264

**A. CLASSIFICATION OF SUBJECT MATTER**
Int.Cl[7] C08F293/00, 8/00

According to International Patent Classification (IPC) or to both national classification and IPC

**B. FIELDS SEARCHED**

Minimum documentation searched (classification system followed by classification symbols)
Int.Cl[7] C08F293/00, 8/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-278931 A (Mitsui Chemicals, Inc.), 10 October, 2001 (10.10.01), Claim 1 & WO 01/53369 A1 & EP 1275670 A1 & US 2003-0055179 A1 | 1-6 |
| Y | JP 2001-278929 A (Mitsui Chemicals, Inc.), 10 October, 2001 (10.10.01), Claim 1 & WO 01/53369 A1 & EP 1275670 A1 & US 2003-0055179 A1 | 1-6 |
| Y | JP 2002-241436 A (Chisso Corp.), 28 August, 2002 (28.08.02), Claim 1 (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 August, 2004 (04.08.04) | 24 August, 2004 (24.08.04) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/010264

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-145932 A (Basell Technology Co. B.V.), 22 May, 2002 (22.05.02), Claim 1 & WO 02/38634 A2 | 1-6 |
| Y | WO 01/96490 A1 (Idemitsu Petrochemical Co., Ltd.), 20 December, 2001 (20.12.01), Claim 1 | 1-6 |
| Y | JP 2001-172325 A (Idemitsu Petrochemical Co., Ltd.), 26 June, 2001 (26.06.01), Claim 3 & WO 99/67303 A1 & WO 01/25300 A1 & EP 1095951 A1 & EP 1227112 A1 | 1-6 |
| Y | JP 2003-511541 A (The Procter & Gamble Co.), 25 March, 2003 (25.03.03), Claim 1 & WO 01/27213 A1 & EP 1238035 A | 1-6 |

Form PCT/ISA/210 (continuation of second sheet) (January 2004)